# EUROPEAN PATENT APPLICATION

(11) **EP 4 087 265 A1**
(43) Date of publication of application: **09.11.2022**
(21) Application number: 20909948.0
(22) Date of filing: 03.01.2020
(51) Int. Cl.: H04N 21/4722, H04N 21/472, H04N 21/478, H04N 21/466, H04N 21/414, H04N 21/231

(54) **DISPLAY APPARATUS AND DISPLAY SYSTEM**

(71) Applicant: LG Electronics Inc., Seoul 07336 (KR)
(72) Inventor: AN, Obong, Seoul 06772 (KR); PARK, Taejin, Seoul 06772 (KR); CHO, Eunyoung, Seoul 06772 (KR)
(74) Representative: Schornack, Oliver
(86) International application number: PCT/KR2020/000135
(87) International publication number: WO 2021/137343

(57) **Abstract**

A display system according to an embodiment of the present disclosure comprises a content DB server, and a display apparatus comprising: a control unit that acquires information associated with content which has been received from the content DB server, and a display for displaying the acquired information associated with the content, wherein the control unit may display, on the display, the information associated with the content, according to a request regardless of whether or not the content is broadcast.

## Description

### Technical Field

The present disclosure relates to a display device and a display system.

### Background Art

Recently, a digital TV service using a wired or wireless communication network has come into wide use. The digital TV service may provide various services which cannot be provided by an existing analog broadcast service.

For example, an Internet protocol television (IPTV) service or a smart TV service which is a digital TV service provides interactivity for enabling a user to actively select a type of a program to be viewed, a viewing time, etc. The IPTV service or the smart TV service may provide various additional services, e.g., Internet search, home shopping, online games, etc. based on such interactivity.

When a user views the content, the user may have questions about products, characters, locations, etc. appearing in the content. In this case, it is inconvenient for the user to manually search for products, characters, locations, etc. appearing in the content by using the Internet or the like. Also, it may be difficult for a user to search products, characters, or locations that matches the one appearing in the content, even if the user searches for products, characters, locations, etc. appearing in the content one by one.

Accordingly, the display device may provide information on products, people, or places related to content which is currently being viewed by the user. On the other hand, in some cases, the user may be curious not only about the content currently being viewed but also about information related to the those appearing in the last viewed content or information related to those appearing in the content scheduled to be broadcast. In addition, the user may want to check information related to those appearing in the content on the smartphone, which makes it easier to purchase the product.

### Invention

### Technical Problem

An object of the present disclosure is to provide a display device and a display system that provide content-related information regardless of whether content is broadcast or not.

An object of the present disclosure is to provide a display device and a display system capable of providing content-related information in various ways without being limited to content.

An object of the present disclosure is to provide a display device and a display system capable of allowing even a mobile terminal to check content-related information and to exchange the content-related information with the display device.

### Technical Solution

A display device according to an embodiment of present disclosure comprises a controller configured to obtain content-related information associated with each content for each content, and a display configured to display the obtained content-related information, wherein the controller displays the content-related information on the display according to a request regardless of whether the content is broadcast.

The content-related information comprises information on at least one of products, people, places or music appearing in content.

When any one content is selected from a contest list, the controller displays the content-related information corresponding to the selected content on the display.

The controller displays the content list composed of content including the content-related information on the display.

The controller displays products appearing in at least one content on the display according to requested sort.

The controller displays the products appearing in the content on the display according to at least one of sort by popularity, sort by latest content, sort by person, sort by category, sort by recommendation or sort by user interest.

The controller further displays broadcast information for selling a product appearing in content on the display.

The controller manages at least one product appearing in content as a stored product and recommends a product of interest to a user based on the stored product.

When a voice command is received, the controller displays the content-related information on the display according to the received voice command.

The controller controls the display to further display at least one product appearing with a product displayed when the product appearing in the content is displayed.

A display system according to an embodiment of present disclosure comprises a content DB server, and a display device comprising a controller configured to obtain content-related information received from the content DB server and a display configured to display the obtained content-related information, wherein the controller displays the content-related information on the display according to a request regardless of whether the content is broadcast.

The content DB server receives content metadata from a first server, receives EPG information from a second server and maps the received content metadata to the received EPG information to generate a content-related information DB.

A display system further comprises a mobile terminal configured to receive the content-related information included in the content-related information DB.

A display system further comprises an account server for linking the content-related information displayed on the mobile terminal and the content-related information displayed on the display device.

A change in the content-related information generated in any one of the display device and the mobile terminal is reflected in the other.

### Effect of the Invention

According to an embodiment of the present disclosure, there is an advantage in that content-related information can be easily checked at a desired time point by a user regardless of whether the content is viewed or not.

According to an embodiment of the present disclosure, since content-related information is not limited to content and is sorted in various ways, there is an advantage in that a user can more easily find desired information among content-related information.

According to an embodiment of the present disclosure, since content-related information can be checked not only on a display device but also on a mobile terminal, there is an advantage in that the user's accessibility to the content-related information is improved.

According to an embodiment of the present disclosure, since content-related information is synchronized in a display device and a mobile terminal, there is an advantage in that a user can more easily manage the content-related information.

### Description of Drawings

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view of utilizing a remote control device according to an embodiment of the present disclosure.
Fig. 5 is a block diagram illustrating a mobile terminal according to an embodiment of the present invention.
FIG. 6 is a view illustrating a method of displaying content-related information of content being displayed by a display device according to the present disclosure.
FIG. 7 is a block diagram illustrating a display system according to an embodiment of the present disclosure.
FIG. 8 is a flowchart illustrating a method of providing content-related information to a user by a display device according to an embodiment of the present disclosure.
FIG. 9 is an exemplary view of a screen displayed when a display device according to an embodiment of the present disclosure executes a content application.
FIGS. 10 to 12 are views illustrating an method of displaying a product appearing in content by a display device according to an embodiment of the present disclosure.
FIGS. 13 to 20 are views illustrating a method of displaying a recommended product appearing in content by a display device according to an embodiment of the present disclosure.
FIGS. 21 to 22 are views illustrating a method of displaying content-related information according to a voice command by a display device according to an embodiment of the present disclosure.
FIG. 23 is a view illustrating an embodiment of a method of displaying information on a broadcast for selling a product appearing in content by a display device according to an embodiment of the present disclosure.
FIG. 24 is a view illustrating another embodiment of a method of displaying information on a broadcast for selling a product appearing in content by a display device according to an embodiment of the present disclosure.
FIG. 25 is a view illustrating a method of displaying a list composed of stored products by a display device according to an embodiment of the present disclosure.
FIGS. 26 and 27 are views illustrating a method of displaying content-related information by a mobile terminal linked to a display device according to an embodiment of the present disclosure.

### Best Mode

Hereinafter, embodiments relating to the present disclosure will be described in detail with reference to the accompanying drawings. The suffixes "module" and "interface" for components used in the description below are assigned or mixed in consideration of easiness in writing the specification and do not have distinctive meanings or roles by themselves.

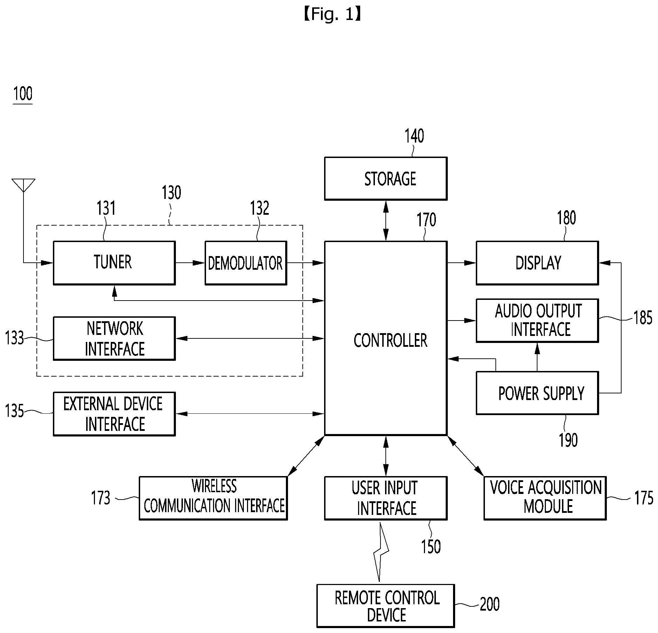

Fig. 1 is a block diagram illustrating a configuration of a display device according to an embodiment of the present disclosure.

Referring to Fig. 1, a display device 100 can include a broadcast reception module 130, an external device interface 135, a storage 140, a user input interface 150, a controller 170, a wireless communication interface 173, a voice acquisition module 175, a display 180, an audio output interface 185, and a power supply 190.

The broadcast reception module 130 can include a tuner 131, a demodulator 132, and a network interface 133.

The tuner 131 can select a specific broadcast channel according to a channel selection command. The tuner 131 can receive broadcast signals for the selected specific broadcast channel.

The demodulator 132 can divide the received broadcast signals into video signals, audio signals, and broadcast program related data signals and restore the divided video signals, audio signals, and data signals to an output available form.

The network interface 133 can provide an interface for connecting the display device 100 to a wired/wireless network including internet network. The network interface 133 can transmit or receive data to or from another user or another electronic device through an accessed network or another network linked to the accessed network.

The network interface 133 can access a predetermined webpage through an accessed network or another network linked to the accessed network. That is, it can transmit or receive data to or from a corresponding server by accessing a predetermined webpage through network.

Then, the network interface 133 can receive contents or data provided from a content provider or a network operator. That is, the network interface 133 can receive contents such as movies, advertisements, games, VODs, and broadcast signals, which are provided from a content provider or a network provider, through network and information relating thereto.

Additionally, the network interface 133 can receive firmware update information and update files provided from a network operator and transmit data to an internet or content provider or a network operator.

The network interface 133 can select and receive a desired application among applications open to the air, through network.

The external device interface 135 can receive an application or an application list in an adjacent external device and deliver it to the controller 170 or the storage 140.

The external device interface 135 can provide a connection path between the display device 100 and an external device. The external device interface 135 can receive at least one of image and audio outputted from an external device that is wirelessly or wiredly connected to the display device 100 and deliver it to the controller. The external device interface 135 can include a plurality of external input terminals. The plurality of external input terminals can include an RGB terminal, at least one High Definition Multimedia Interface (HDMI) terminal, and a component terminal.

An image signal of an external device inputted through the external device interface 135 can be outputted through the display 180. A sound signal of an external device inputted through the external device interface 135 can be outputted through the audio output interface 185.

An external device connectable to the external device interface 135 can be one of a set-top box, a Blu-ray player, a DVD player, a game console, a sound bar, a smartphone, a PC, a USB Memory, and a home theater system but this is just exemplary.

Additionally, some content data stored in the display device 100 can be transmitted to a user or an electronic device, which is selected from other users or other electronic devices pre-registered in the display device 100.

The storage 140 can store signal-processed image, voice, or data signals stored by a program in order for each signal processing and control in the controller 170.

Additionally, the storage 140 can perform a function for temporarily store image, voice, or data signals outputted from the external device interface 135 or the network interface 133 and can store information on a predetermined image through a channel memory function.

The storage 140 can store an application or an application list inputted from the external device interface 135 or the network interface 133.

The display device 100 can play content files (for example, video files, still image files, music files, document files, application files, and so on) stored in the storage 140 and provide them to a user.

The user input interface 150 can deliver signals inputted from a user to the controller 170 or deliver signals from the controller 170 to a user. For example, the user input interface 150 can receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR.

Additionally, the user input interface 150 can deliver, to the controller 170, control signals inputted from local keys (not shown) such as a power key, a channel key, a volume key, and a setting key.

Image signals that are image-processed in the controller 170 can be inputted to the display 180 and displayed as an image corresponding to corresponding image signals. Additionally, image signals that are image-processed in the controller 170 can be inputted to an external output device through the external device interface 135.

Voice signals processed in the controller 170 can be outputted to the audio output interface 185. Additionally, voice signals processed in the controller 170 can be inputted to an external output device through the external device interface 135.

Besides that, the controller 170 can control overall operations in the display device 100.

Additionally, the controller 170 can control the display device 100 by a user command or internal program inputted through the user input interface 150 and download a desired application or application list into the display device 100 in access to network.

The controller 170 can output channel information selected by a user together with processed image or voice signals through the display 180 or the audio output interface 185.

Additionally, according to an external device image playback command received through the user input interface 150, the controller 170 can output image signals or voice signals of an external device such as a camera or a camcorder, which are inputted through the external device interface 135, through the display 180 or the audio output interface 185.

Moreover, the controller 170 can control the display 180 to display images and control broadcast images inputted through the tuner 131, external input images inputted through the external device interface 135, images inputted through the network interface, or images stored in the storage 140 to be displayed on the display 180. In this case, an image displayed on the display 180 can be a still image or video and also can be a 2D image or a 3D image.

Additionally, the controller 170 can play content stored in the display device 100, received broadcast content, and external input content inputted from the outside, and the content can be in various formats such as broadcast images, external input images, audio files, still images, accessed web screens, and document files.

Moreover, the wireless communication interface 173 can perform a wired or wireless communication with an external electronic device. The wireless communication interface 173 can perform short-range communication with an external device. For this, the wireless communication interface 173 can support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 can support wireless communication between the display device 100 and a wireless communication system, between the display device 100 and another display device 100, or between networks including the display device 100 and another display device 100 (or an external server) through wireless area networks. The wireless area networks can be wireless personal area networks.

Herein, the other display device 100 can be a mobile terminal such as a wearable device (for example, a smart watch, a smart glass, and a head mounted display (HMD)) or a smartphone, which is capable of exchanging data (or interworking) with the display device 100. The wireless communication interface 173 can detect (or recognize) a communicable wearable device around the display device 100. Furthermore, if the detected wearable device is a device authenticated to communicate with the display device 100, the controller 170 can transmit at least part of data processed in the display device 100 to the wearable device through the wireless communication interface 173. Accordingly, a user of the wearable device can use the data processed in the display device 100 through the wearable device.

The voice acquisition module 175 can acquire audio. The voice acquisition module 175 may include at least one microphone (not shown), and can acquire audio around the display device 100 through the microphone (not shown).

The display 180 can convert image signals, data signals, or OSD signals, which are processed in the controller 170, or images signals or data signals, which are received in the external device interface 135, into R, G, and B signals to generate driving signals.

Furthermore, the display device 100 shown in Fig. 1 is just one embodiment of the present disclosure and thus, some of the components shown can be integrated, added, or omitted according to the specification of the actually implemented display device 100.

That is, if necessary, two or more components can be integrated into one component or one component can be divided into two or more components and configured. Additionally, a function performed by each block is to describe an embodiment of the present disclosure and its specific operation or device does not limit the scope of the present disclosure.

According to another embodiment of the present disclosure, unlike Fig. 1, the display device 100 can receive images through the network interface 133 or the external device interface 135 and play them without including the tuner 131 and the demodulator 132.

For example, the display device 100 can be divided into an image processing device such as a set-top box for receiving broadcast signals or contents according to various network services and a content playback device for playing contents inputted from the image processing device.

In this case, an operating method of a display device according to an embodiment of the present disclosure described below can be performed by one of the display device described with reference to Fig. 1, an image processing device such as the separated set-top box, and a content playback device including the display 180 and the audio output interface 185.

The audio output interface 185 receives the audio processed signal from the controller 170 and outputs the sound.

The power supply 190 supplies the corresponding power throughout the display device 100. In particular, the power supply 190 supplies power to the controller 170 that can be implemented in the form of a System On Chip (SOC), a display 180 for displaying an image, and the audio output interface 185 for outputting audio or the like.

Specifically, the power supply 190 may include a converter for converting an AC power source into a DC power source, and a DC/DC converter for converting a level of the DC source power.

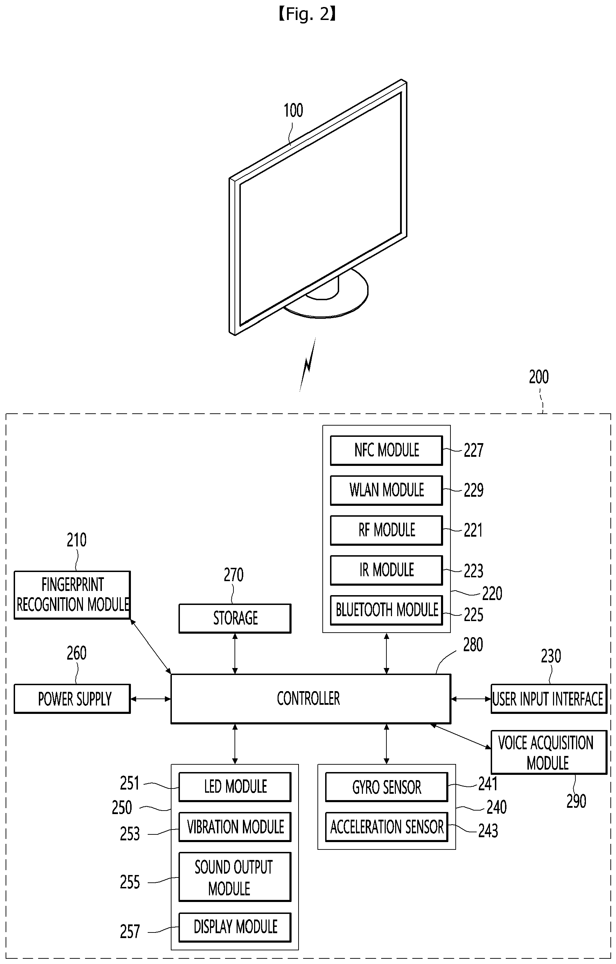

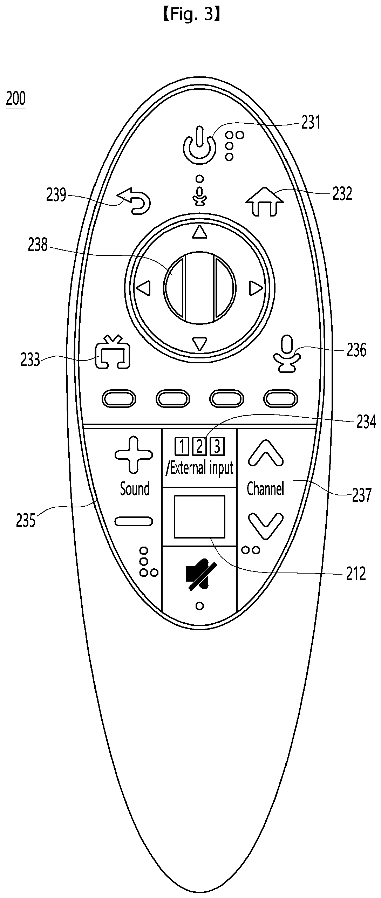

Then, referring to Figs. 2 and 3, a remote control device is described according to an embodiment of the present disclosure.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 can include a fingerprint recognition module 210, a wireless communication interface 220, a user input interface 230, a sensor 240, an output interface 250, a power supply 260, a storage 270, a controller 280, and a voice acquisition module 290.

Referring to Fig. 2, the wireless communication interface 220 transmits/receives signals to/from an arbitrary any one of display devices according to the above-mentioned embodiments of the present disclosure.

The remote control device 200 can include an RF module 221 for transmitting/receiving signals to/from the display device 100 according to the RF communication standards and an IR module 223 for transmitting/receiving signals to/from the display device 100 according to the IR communication standards. Additionally, the remote control device 200 can include a Bluetooth module 225 for transmitting/receiving signals to/from the display device 100 according to the Bluetooth communication standards. Additionally, the remote control device 200 can include an NFC module 227 for transmitting/receiving signals to/from the display device 100 according to the Near Field Communication (NFC) communication standards and a WLAN module 229 for transmitting/receiving signals to/from the display device 100 according to the Wireless LAN (WLAN) communication standards

Additionally, the remote control device 200 can transmit signals containing information on a movement of the remote control device 200 to the display device 100 through the wireless communication interface 220.

Moreover, the remote control device 200 can receive signals transmitted from the display device 100 through the RF module 221 and if necessary, can transmit a command on power on/off, channel change, and volume change to the display device 100 through the IR module 223.

The user input interface 230 can be configured with a keypad button, a touch pad, or a touch screen. A user can manipulate the user input interface 230 to input a command relating to the display device 100 to the remote control device 200. If the user input interface 230 includes a hard key button, a user can input a command relating to the display device 100 to the remote control device 200 through the push operation of the hard key button. This will be described with reference to Fig. 3.

Referring to Fig. 3, the remote control device 200 can include a plurality of buttons. The plurality of buttons can include a fingerprint recognition button 212, a power button 231, a home button 232, a live button 233, an external input button 234, a voice adjustment button 235, a voice recognition button 236, a channel change button 237, a check button 238, and a back button 239.

The fingerprint recognition button 212 can be a button for recognizing a user's fingerprint. According to an embodiment of the present disclosure, the fingerprint recognition button 212 can perform a push operation and receive a push operation and a fingerprint recognition operation. The power button 231 can be button for turning on/off the power of the display device 100. The power button 231 can be button for moving to the home screen of the display device 100. The live button 233 can be a button for displaying live broadcast programs. The external input button 234 can be button for receiving an external input connected to the display device 100. The voice adjustment button 235 can be button for adjusting the size of a volume outputted from the display device 100. The voice recognition button 236 can be a button for receiving user's voice and recognizing the received voice. The channel change button 237 can be a button for receiving broadcast signals of a specific broadcast channel. The check button 238 can be a button for selecting a specific function and the back button 239 can be a button for returning to a previous screen.

Again, Fig. 2 is described.

If the user input interface 230 includes a touch screen, a user can touch a soft key of the touch screen to input a command relating to the display device 100 to the remote control device 200. Additionally, the user input interface 230 can include various kinds of input means manipulated by a user, for example, a scroll key and a jog key, and this embodiment does not limit the scope of the present disclosure.

The sensor 240 can include a gyro sensor 241 or an acceleration sensor 243 and the gyro sensor 241 can sense information on a movement of the remote control device 200.

For example, the gyro sensor 241 can sense information on an operation of the remote control device 200 on the basis of x, y, and z axes and the acceleration sensor 243 can sense information on a movement speed of the remote control device 200. Moreover, the remote control device 200 can further include a distance measurement sensor and sense a distance with respect to the display 180 of the display device 100.

The output interface 250 can output image or voice signals corresponding to a manipulation of the user input interface 230 or corresponding to signals transmitted from the display device 100. A user can recognize whether the user input interface 230 is manipulated or the display device 100 is controlled through the output interface 250.

For example, the output interface 250 can include an LED module 251 for flashing, a vibration module 253 for generating vibration, a sound output module 255 for outputting sound, or a display module 257 for outputting an image, if the user input interface 230 is manipulated or signals are transmitted/received to/from the display device 100 through the wireless communication interface 220.

Additionally, the power supply 260 supplies power to the remote control device 200 and if the remote control device 200 does not move for a predetermined time, stops the power supply, so that power waste can be reduced. The power supply 260 can resume the power supply if a predetermined key provided at the remote control device 200 is manipulated.

The storage 270 can store various kinds of programs and application data necessary for a control or operation of the remote control device 200. If the remote control device 200 transmits/receives signals wirelessly through the display device 100 and the RF module 221, the remote control device 200 and the display device 100 transmits/receives signals through a predetermined frequency band.

The controller 280 of the remote control device 200 can store, in the storage 270, information on a frequency band for transmitting/receiving signals to/from the display device 100 paired with the remote control device 200 and refer to it.

The controller 280 controls general matters relating to a control of the remote control device 200. The controller 280 can transmit a signal corresponding to a predetermined key manipulation of the user input interface 230 or a signal corresponding to a movement of the remote control device 200 sensed by the sensor 240 to the display device 100 through the wireless communication interface 220.

Additionally, the voice acquisition module 290 of the remote control device 200 can obtain voice.

The voice acquisition module 290 can include at least one microphone 291 and obtain voice through the microphone 291.

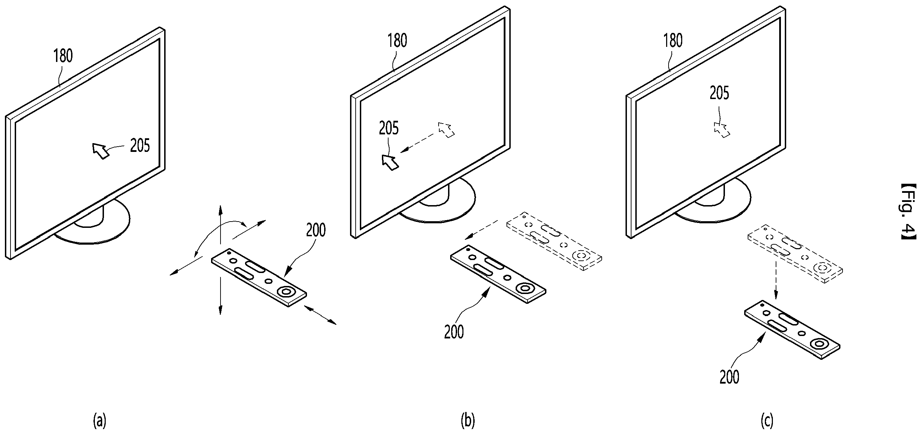

Then, Fig. 4 is described.

Fig. 4 is a view of utilizing a remote control device according to an embodiment of the present disclosure.

Fig. 4A illustrates that a pointer 205 corresponding to the remote control device 200 is displayed on the display 180.

A user can move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 can be referred to as a spatial remote controller.

Fig. 4B illustrates that if a user moves the remote control device 200, the pointer 205 displayed on the display 180 of the display device 100 is moved to the left in correspondence thereto.

Information on a movement of the remote control device 200 detected through a sensor of the remote control device 200 is transmitted to the display device 100. The display device 100 can calculate the coordinates of the pointer 205 from the information on the movement of the remote control device 200. The display device 100 can display the pointer 205 to match the calculated coordinates.

Fig. 4C illustrates that while a specific button in the remote control device 200 is pressed, a user moves the remote control device 200 away from the display 180. Thus, a selection area in the display 180 corresponding to the pointer 205 can be zoomed in and displayed largely.

On the other hand, if a user moves the remote control device 200 close to the display 180, a selection area in the display 180 corresponding to the pointer 205 can be zoomed out and displayed reduced.

On the other hand, if the remote control device 200 is away from the display 180, a selection area can be zoomed out and if the remote control device 200 is close to the display 180, a selection area can be zoomed in.

Additionally, if a specific button in the remote control device 200 is pressed, the recognition of a vertical or horizontal movement can be excluded. That is, if the remote control device 200 is moved away from or close to the display 180, the up, down, left, or right movement can not be recognized and only the back and fourth movement can be recognized. While a specific button in the remote control device 200 is not pressed, only the pointer 205 is moved according to the up, down, left or right movement of the remote control device 200.

Moreover, the moving speed or moving direction of the pointer 205 can correspond to the moving speed or moving direction of the remote control device 200.

Furthermore, a pointer in this specification means an object displayed on the display 180 in correspondence to an operation of the remote control device 200. Accordingly, besides an arrow form displayed as the pointer 205 in the drawing, various forms of objects are possible. For example, the above concept includes a point, a cursor, a prompt, and a thick outline. Then, the pointer 205 can be displayed in correspondence to one point of a horizontal axis and a vertical axis on the display 180 and also can be displayed in correspondence to a plurality of points such as a line and a surface.

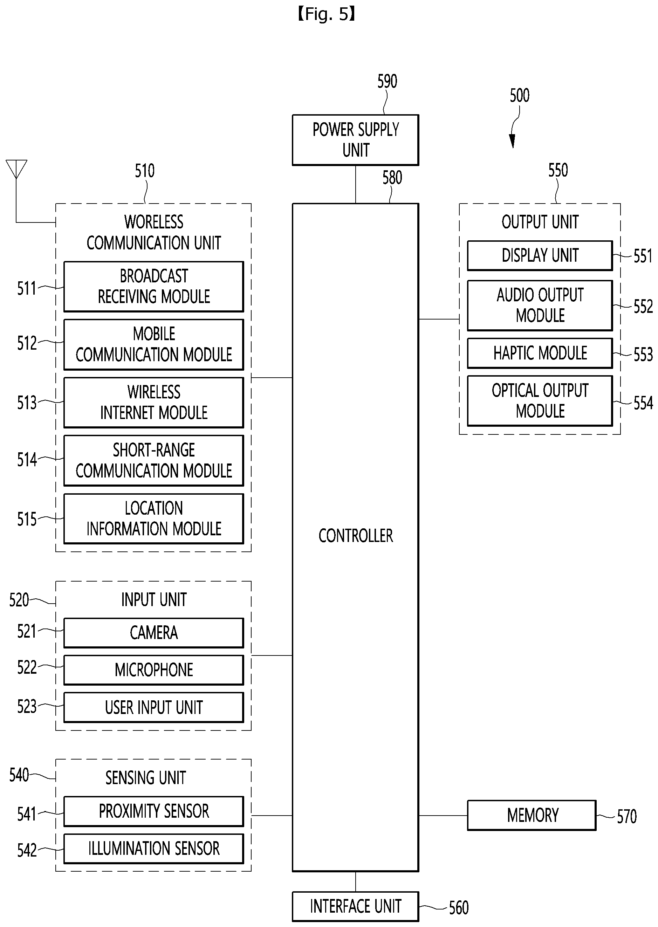

Fig. 5 is a block diagram illustrating a mobile terminal according to an embodiment of the present invention.

The mobile terminal 500 can include a wireless communication unit 510, an input unit 520, the sensing unit 540, an output unit 550, an interface unit 560, the memory 570, a control unit 580, and a power supply unit 590. In implementing a mobile terminal, components shown in Fig. 5 are not necessary, so that a mobile terminal described in this specification can include components less or more than the components listed above.

In more detail, the wireless communication unit 510 in the components can include at least one module allowing wireless communication between the mobile terminal 500 and a wireless communication system, between the mobile terminal 500 and another mobile terminal 500, or between the mobile terminal 500 and an external server. Additionally, the wireless communication unit 510 can include at least one module connecting the mobile terminal 500 to at least one network.

The wireless communication unit 510 can include at least one of a broadcast receiving module 511, a mobile communication module 512, a wireless internet module 513, a short-range communication module 514, and a location information module 515.

The input unit 520 can include a camera 521 or an image input unit for image signal input, a microphone 522 or an audio input unit for receiving audio signal input, and a user input unit 523 (for example, a touch key and a mechanical key)) for receiving information from a user. Voice data or image data collected by the input unit 520 are analyzed and processed as a user's control command.

The sensing unit 540 can include at least one sensor for sensing at least one of information in a mobile terminal, environmental information around a mobile terminal, and user information. For example, the sensing unit 540 can include at least one of a proximity sensor 541, an illumination sensor 542, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone (for example, the microphone 122), a battery gauge, an environmental sensor (for example, a barometer, a hygrometer, a thermometer, a radiation sensor, a thermal sensor, and a gas sensor), and a chemical sensor (for example, an electronic noise, a healthcare sensor, and a biometric sensor). Moreover, a mobile terminal disclosed in this specification can combines information sensed by at least two or more sensors among such sensors and can then utilize it.

The output unit 550 is used to generate a visual, auditory, or haptic output and can include at least one of a display unit 551, a sound output unit 552, a haptic module 553, and an optical output unit 554. The display unit 551 can be formed with a mutual layer structure with a touch sensor or formed integrally, so that a touch screen can be implemented. Such a touch screen can serve as the user input unit 523 providing an input interface between the mobile terminal 500 and a user and an output interface between the mobile terminal 500 and a user at the same time.

The interface unit 560 can serve as a path to various kinds of external devices connected to the mobile terminal 500. The interface unit 560 can include at least one of a wired/wireless headset port, an external charger port, a wired/wireless data port, a memory card port, a port connecting a device equipped with an identification module, an audio Input/Output (I/O) port, a video I/O port, and an earphone port. In correspondence to that an external device is connected to the interface unit 560, the mobile terminal 500 can perform an appropriate control relating to the connected external device.

Additionally, the memory 570 can store data supporting various functions of the mobile terminal 500. The memory 570 can store a plurality of application programs (for example, application programs or applications) running on the mobile terminal 500 and also data and commands for operations of the mobile terminal 500. At least part of such an application program can be downloaded from an external server through a wireless communication. Additionally, at least part of such an application program can be included in the mobile terminal 500 from the time of shipment in order to perform a basic function (for example, an incoming call, a transmission function, and a message reception) of the mobile terminal 500. Moreover, an application program can be stored in the memory 570 and installed on the mobile terminal 500, so that it can run to perform an operation (or a function) of the mobile terminal 100 by the control unit 580.

The control unit 580 can control overall operations of the mobile terminal 500 generally besides an operation relating to the application program. The control unit 580 can provide appropriate information or functions to a user or process them by processing signals, data, and information inputted/outputted through the above components or executing application programs stored in the memory 570.

Additionally, in order to execute an application program stored in the memory 570, the control unit 580 can control at least part of the components shown in Fig. 5. Furthermore, in order to execute the application program, the control unit 580 can combine at least two of the components in the mobile terminal 500 and can then operate it.

The power supply unit 590 can receive external power or internal power under a control of the control unit 580 and can then supply power to each component in the mobile terminal 500. The power supply unit 590 includes a battery and the battery can be a built-in battery or a replaceable battery.

At least part of the each component can operate cooperatively in order to implement operations, controls, or control methods of a mobile terminal 100 according to various embodiments of the present invention described below. Additionally, the operations, controls, or control methods of a mobile terminal 100 can be implemented on the mobile terminal 100 by executing at least one application program stored in the memory 570.

Hereinafter, prior to examining various embodiments implemented through the mobile terminal 500, the above-listed components are described in more detail with reference to Fig. 5.

First, in describing the wireless communication unit 510, the broadcast receiving module 510 of the wireless communication unit 511 can receive a broadcast signal and/or broadcast related information from an external broadcast management server through a broadcast channel. The broadcast channel can include a satellite channel and a terrestrial channel. At least two broadcast receiving modules for simultaneous broadcast reception for at least two broadcast channels or broadcast channel switching can be provided to the mobile terminal 100.

The mobile communication module 512 can transmit/receive a wireless signal to/from at least one of a base station, an external terminal, and a server on a mobile communication network established according to the technical standards or communication methods for mobile communication (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A)).

The wireless signal can include various types of data according to a voice call signal, a video call signal, or text/multimedia message transmission.

The wireless internet module 513 refers to a module for wireless internet access and can be built in or external to the mobile terminal 500. The wireless internet module 513 can be configured to transmit/receive a wireless signal in a communication network according to wireless internet technologies.

The wireless internet technology can include Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A) and the wireless internet module 513 transmits/receives data according at least one wireless internet technology including internet technology not listed above.

From the viewpoint that wireless internet access by WiBro, HSDPA, HSUPA, GSM, CDMA, WCDMA, LTE, and LTE-A is achieved through a mobile communication network, the wireless internet module 513 performing wireless internet access through the mobile communication network can be understood as one type of the mobile communication module 512.

The short-range communication module 514 can support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The short-range communication module 514 can support wireless communication between the mobile terminal 500 and a wireless communication system, between the mobile terminal 500 and another mobile terminal 500, or between networks including the mobile terminal 500 and another mobile terminal 100 (or an external server) through wireless area networks. The wireless area networks can be wireless personal area networks.

Here, the other mobile terminal 500 can be a wearable device (for example, a smart watch, a smart glass, and an HMD) that is capable of exchanging data (or interworking) with the mobile terminal 500. The short-range communication module 514 can detect (or recognize) a wearable device around the mobile terminal 500, which is capable of communicating with the mobile terminal 500 Furthermore, if the detected wearable device is a device authenticated to communicate with the mobile terminal 500, the control unit 580 can transmit at least part of data processed in the mobile terminal 500 to the wearable device through the short-range communication module 514. Accordingly, a user of the wearable device can use the data processed in the mobile terminal 500 through the wearable device. For example, according thereto, if a call is received by the mobile terminal 500, a user can perform a phone call through the wearable device or if a message is received by the mobile terminal 500, a user can check the received message.

The location information module 515 is a module for obtaining the location (or the current location) of a mobile terminal and its representative examples include a global positioning system (GPS) module or a Wi-Fi module. For example, the mobile terminal can obtain its position by using a signal transmitted from a GPS satellite through the GPS module. As another example, the mobile terminal can obtain its position on the basis of information of a wireless access point (AP) transmitting/receiving a wireless signal to/from the Wi-Fi module, through the Wi-Fi module. If necessary, the position information module 115 can perform a function of another module in the wireless communication unit 510 in order to obtain data on the location of the mobile terminal substitutionally or additionally. The location information module 115 is a module for obtaining the position (or the current position) of the mobile terminal and is not limited to a module directly calculating and obtaining the position of the mobile terminal.

Then, the input unit 520 is used for inputting image information (or signal), audio information (or signal), data, or information inputted from a user and the mobile terminal 500 can include at least one camera 521 in order for inputting image information. The camera 521 processes image frames such as a still image or a video obtained by an image sensor in a video call mode or a capturing mode. The processed image frame can be displayed on the display unit 551 or stored in the memory 570. Moreover, a plurality of cameras 521 equipped in the mobile terminal 500 can be arranged in a matrix structure and through the camera 521 having such a matrix structure, a plurality of image information having various angles or focuses can be inputted to the input terminal 500. Additionally, the plurality of cameras 521 can be arranged in a stereo structure to obtain the left and right images for implementing a three-dimensional image.

The microphone 522 processes external sound signals as electrical voice data. The processed voice data can be utilized variously according to a function (or an application program being executed) being performed in the mobile terminal 500. Moreover, various noise canceling algorithms for removing noise occurring during the reception of external sound signals can be implemented in the microphone 522.

The user input unit 523 is to receive information from a user and if information is inputted through the user input unit 523, the control unit 580 can control an operation of the mobile terminal 500 to correspond to the inputted information. The user input unit 523 can include a mechanical input means (or a mechanical key, for example, a button, a dome switch, a jog wheel, and a jog switch at the front, back or side of the mobile terminal 500) and a touch type input means. As one example, a touch type input means can include a virtual key, a soft key, or a visual key, which is displayed on a touch screen through software processing or can include a touch key disposed at a portion other than the touch screen. Moreover, the virtual key or visual key can have various forms and can be disposed on a touch screen and for example, can include graphic, text, icon, video, or a combination thereof.

Moreover, the sensing unit 540 can sense at least one of information in a mobile terminal, environmental information around a mobile terminal, and user information and can then generate a sensing signal corresponding thereto. On the basis of such a sensing signal, the control unit 580 can control the drive or control of the mobile terminal 500 or can perform data processing, functions, or operations relating to an application program installed in the mobile terminal 500. Representative sensors among various sensors included in the sensing unit 540 will be described in more detail.

First, the proximity sensor 541 refers to a sensor detecting whether there is an object approaching a predetermined detection surface or whether there is an object around by using the strength of an electromagnetic field or infrared, without mechanical contact. The proximity sensor 541 can disposed in an inner area of a mobile terminal surrounded by the touch screen or around the touch screen.

Examples of the proximity sensor 541 can include a transmission-type photoelectric sensor, a direct reflective-type photoelectric sensor, a mirror reflective-type photoelectric sensor, a high-frequency oscillation-type proximity sensor, a capacitive-type proximity sensors, a magnetic-type proximity sensor, and an infrared proximity sensor. If the touch screen is a capacitive type, the proximity sensor 541 can be configured to detect the proximity of an object by changes in an electric field according to the proximity of the object having conductivity. In this case, the touch screen (or a touch sensor) itself can be classified as a proximity sensor.

Moreover, for convenience of description, an action for recognizing the position of an object on the touch screen as the object is close to the touch screen without contacting the touch screen is called "proximity touch" and an action that the object actually contacts the touch screen is called "contact touch". A position that an object is proximity-touched on the touch screen is a position that the object vertically corresponds to the touch screen if the object is proximity-touched. The proximity sensor 541 can detect a proximity touch and a proximity touch pattern (for example, a proximity touch distance, a proximity touch direction, a proximity touch speed, a proximity touch time, a proximity touch position, and a proximity touch movement state). Moreover, the control unit 580 processes data (for information) corresponding to a proximity touch operation and a proximity touch pattern, detected through the proximity sensor 541, and furthermore, can output visual information corresponding to the processed data on the touch screen. Furthermore, according to whether a touch for the same point on the touch screen is a proximity touch or a contact touch, the control unit 580 can control the mobile terminal 500 to process different operations or data (or information).

The touch sensor detects a touch (or a touch input) applied to the touch screen (or the display unit 551) by using at least one of various touch methods, for example, a resistive film method, a capacitive method, an infrared method, an ultrasonic method, and a magnetic field method.

For example, the touch sensor can be configured to convert a pressure applied to a specific portion of the touch screen or changes in capacitance occurring at a specific portion into electrical input signals. The touch sensor can be configured to detect a position and area that a touch target applying a touch on the touch screen touches the touch sensor, a pressured if touched, and a capacitance if touched. Here, the touch target, as an object applying a touch on the touch sensor, can be a finger, a touch pen, a stylus pen, or a pointer, for example.

In such a manner, if there is a touch input on the touch sensor, signal(s) corresponding thereto are sent to a touch controller. The touch controller processes the signal(s) and then transmits corresponding data to the control unit 580. Therefore, the control unit 580 can recognize which area of the display unit 551 is touched. Herein, the touch controller can be an additional component separated from the control unit 580 or can be the control unit 580 itself.

Moreover, the control unit 580 can perform different controls or the same control according to types of a touch target touching the touch screen (or a touch key equipped separated from the touch screen). Whether to perform different controls or the same control according to types of a touch target can be determined according to a current operation state of the mobile terminal 500 or an application program in execution.

Moreover, the above-mentioned touch sensor and proximity sensor are provided separately or combined and can thus sense various types of touches, for example, short (or tap) touch), long touch, multi touch, drag touch, flick touch, pinch-in touch, pinch-out touch, swipe touch, and hovering touch for the touch screen.

The ultrasonic sensor can recognize position information of a detection target by using ultrasonic waves. Moreover, the control unit 580 can calculate the position of a wave source through information detected by an optical sensor and a plurality of ultrasonic sensors. The position of the wave source can be calculated by using the property that light is much faster than ultrasonic wave, that is, a time that light reaches an optical signal is much shorter than a time that ultrasonic wave reaches an ultrasonic sensor. In more detail, the position of the wave source can be calculated by using a time difference with a time that ultrasonic wave reaches by using light as a reference signal.

Moreover, the camera 520 described as a configuration of the input unit 521 can include at least one of a camera sensor (for example, CCD and CMOS), a photo sensor (or an image sensor), and a laser sensor.

The camera 521 and the laser sensor can be combined to detect a touch of a detection target for a three-dimensional image. The photo sensor can be stacked on a display device and is configured to scan a movement of a detection target close to the touch screen. In more detail, the photo sensor mounts a photo diode and a transistor (TR) in a row/column and scans content disposed on the photo sensor by using an electrical signal changing according to an amount of light applied to the photo diode. That is, the photo sensor can calculate the coordinates of a detection target according to the amount of change in light and through this, can obtain the position information of the detection target.

The display unit 551 can display (output) information processed in the mobile terminal 500. For example, the display unit 551 can display execution screen information of an application program running on the mobile terminal 500 or user interface (UI) and graphic user interface (GUI) information according to such execution screen information.

Additionally, the display unit 551 can be configured as a three-dimensional display unit displaying a three-dimensional image.

A three-dimensional display method, for example, a stereoscopic method (a glasses method), an autostereoscopic (no glasses method), a projection method (a holographic method) can be applied to the three-dimensional display unit

The sound output unit 552 can output audio data received from the wireless communication unit 510 or stored in the memory 570 in a call signal reception or call mode, a recording mode, a voice recognition mode, or a broadcast reception mode. The sound output unit 552 can output a sound signal relating to a function (for example, a call signal reception sound and a message reception sound) performed by the mobile terminal 500. The sound output unit 552 can include a receiver, a speaker, and a buzzer.

The haptic module 553 generates various haptic effects that a user can feel. A representative example of a haptic effect that the haptic module 553 generates is vibration. The intensity and pattern of vibration generated by the haptic module 553 can be controlled by a user's selection or a setting of a control unit. For example, the haptic module 553 can synthesize and output different vibrations or output different vibrations sequentially.

The haptic module 553 can generate various haptic effects, for example, effects by a pin arrangement moving vertical to a contact skin surface, injection power or suction power of air through an injection port or a suction port, rubbing a skin surface, electrode contact, stimulus of electrostatic force and effects by the reproduction of cold/warm sense by using a device absorbing or emitting heat.

The haptic module 553 can be implemented to deliver a haptic effect through a direct contact and also allow a user to feel a haptic effect through a muscle sense such as a finger or an arm. The haptic module 553 can be more than two according to a configuration aspect of the mobile terminal 500.

The optical output unit 554 outputs a signal for notifying event occurrence by using light of a light source of the mobile terminal 500. An example of an event occurring in the mobile terminal 500 includes message reception, call signal reception, missed calls, alarm, schedule notification, e-mail reception, and information reception through an application.

A signal outputted from the optical output unit 554 is implemented as a mobile terminal emits single color of multi-color to the front or the back. The signal output can be terminated if a mobile terminal detects user's event confirmation.

The interface unit 560 can serve as a path to all external devices connected to the mobile terminal 500. The interface unit 560 can receive data from an external device, receive power and deliver it to each component in the mobile terminal 500, or transmit data in the mobile terminal 500 to an external device. For example, the interface unit 560 can include a wired/wireless headset port, an external charger port, a wired/wireless data port, a memory card port, a port connecting a device equipped with an identification module, an audio I/O port, a video I/O port, and an earphone port.

Moreover, the identification module, as a chip storing various information for authenticating usage authority of the mobile terminal 500, can include a user identity module (UIM), a subscriber identity module (SIM), and a universal subscriber identity module (USIM). A device equipped with an identification module (hereinafter referred to as an identification device) can be manufactured in a smart card form. Accordingly, the identification device can be connected to the terminal 100 through the interface unit 560.

Additionally, if the mobile terminal 500 is connected to an external cradle, the interface unit 560 can become a path through which power of the cradle is supplied to the mobile terminal 500 or a path through which various command signals inputted from the cradle are delivered to the mobile terminal 500 by a user. The various command signals or the power inputted from the cradle can operate as a signal for recognizing that the mobile terminal 500 is accurately mounted on the cradle.

The memory 570 can store a program for an operation of the control unit 580 and can temporarily store input/output data (for example, a phone book, a message, a still image, and a video). The memory 570 can store data on various patterns of vibrations and sounds outputted during a touch input on the touch screen.

The memory 570 can include at least one type of storage medium among flash memory type, hard disk type, Solid State Disk (SSD) type, Silicon Disk Drive (SDD) type, multimedia card micro type, card type memory (for example, SD or XD memory type), random access memory (RAM) type, static random access memory (SRAM) type, read-only memory (ROM) type, electrically erasable programmable read-only memory (EEPROM) type, programmable read-only memory (PROM) type, magnetic memory type, magnetic disk type, and optical disk type. The mobile terminal 500 can operate in relation to a web storage performing a storage function of the memory 570 on internet.

Moreover, as mentioned above, the control unit 580 can control operations relating to an application program and overall operations of the mobile terminal 500 in general. For example, if a state of the mobile terminal 100 satisfies set conditions, the control unit 580 can execute or release a lock state limiting an output of a control command of a user for applications.

Additionally, the control unit 580 can perform a control or processing relating to a voice call, data communication, and a video call can perform pattern recognition processing for recognizing handwriting input or drawing input on the touch screen as a text and an image, respectively. Furthermore, the control unit 580 can use at least one or a combination of the above components to perform a control in order to implement various embodiments described below on the mobile terminal 500.

The power supply unit 590 can receive external power or internal power under a control of the control unit 580 and can then supply power necessary for an operation of each component. The power supply unit 590 includes a battery. The battery is a rechargeable built-in battery and can be detachably coupled to a terminal body in order for charging.

Additionally, the power supply unit 590 can include a connection port and the connection port can be configured as one example of the interface unit 160 to which an external charger supplying power for charging of the battery is electrically connected.

As another example, the power supply unit 590 can be configured to charge a battery through a wireless method without using the connection port. In this case, the power supply unit 590 can receive power from an external wireless power transmission device through at least one of an inductive coupling method based on a magnetic induction phenomenon, and a magnetic resonance coupling method based on an electromagnetic resonance phenomenon.

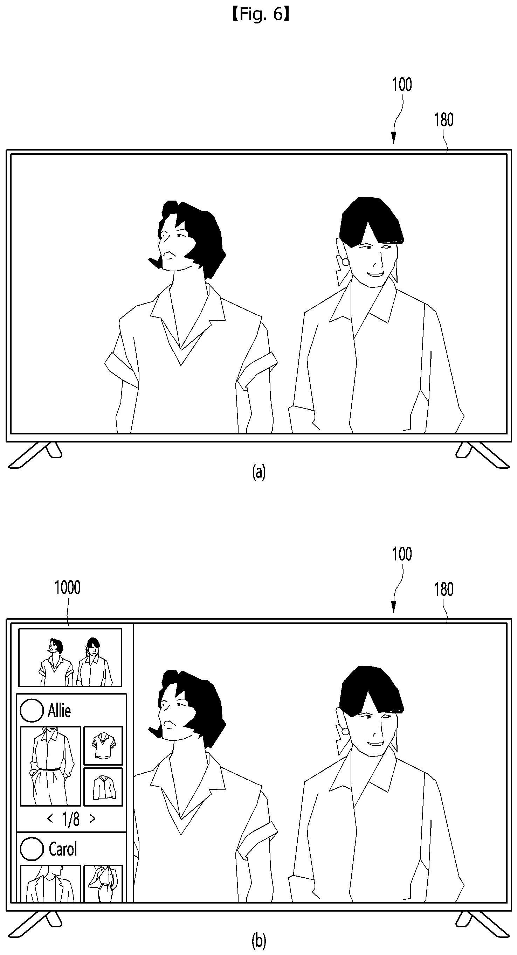

FIG. 6 is a view illustrating a method of displaying content-related information of content being displayed by a display device according to the present disclosure.

The controller 170 may display content on the display 180 as shown in (a) of FIG. 6. In this case, the controller 170 may further display, on the display 180, information 1000 related to the content being displayed on the display 180, as shown in (b) of FIG. 6. The information 1000 related to the content may be information related to the content which is currently being viewed by a user.

Hereinafter, for convenience of description, the information related to the content is referred to as content-related information.

The content-related information may include information on at least one of products, people, places, and music appearing in the content. That is, the content-related information may mean information on those appearing in the content. In addition, the content-related information may include information on products, people, places, or music similar to those appearing in the content, as well as information on products, people, places, or music appearing in the content.

The display device 100 may provide the content-related information related to a current scene among the content-related information, when providing the content-related information. For example, the content-related information 1000 illustrated in the example of FIG. 6 may be information related to those appearing in a scene being displayed when the content-related information is requested. That is, the display device 100 may provide information on products, people, places, or music related to a scene currently viewed by the user. Through this, the display device 100 can immediately provide information that the user may be curious about while watching the content.

Meanwhile, the user may be curious about the content-related information on a scene other than the current scene. Also, the user may be curious about the content-related information of content other than the content currently being viewed. As an example, the user may be curious about the content-related information of past content or content scheduled to be broadcast. As another example, the user may be curious about the content-related information of the latest content, the content-related information of a specific actor, and the like, in addition to one specific content.

In addition, the user may want to check the content-related information not only on the display device 100 but also the mobile terminal 500 such as a smartphone. This is because the user stores information necessary for product purchase in the mobile terminal 500 rather than the display device 100 in many cases, so that the user can easily purchase the product through the content-related information in the mobile terminal 500.

For the above reasons, the present disclosure provides the display device 100 and the display system 1 capable of providing the content-related information without being limited to the content currently being broadcast, the display device 100, and the like.

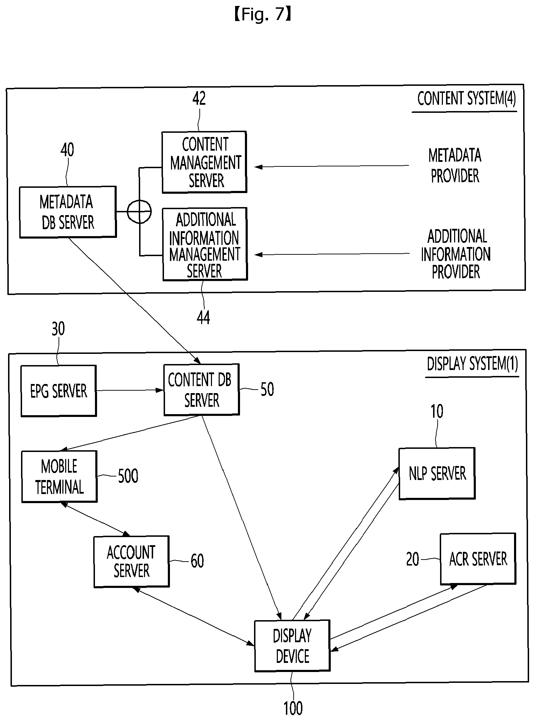

FIG. 7 is a block diagram illustrating a display system according to an embodiment of the present disclosure.

The display system 1 may include some or all of an NLP server 10, an ACR server 20, an EPG server 30, an account server 60, a content DB server 50, a display device 100 and a mobile terminal 500.

When the display device 100 receives a voice command, the NLP server 10 may analyze intention of the voice command and provides it to the display device 100. That is, when the display device 100 transmits voice data according to the voice command to the NLP server 10, the NLP server 10 may transmit a user's utterance intention to the display device 100 by analyzing the voice data.

For example, the display device 100 may obtain the type of information requested by the user through the voice command through the NLP server 10, when receiving the voice command requesting the content-related information.

The ACR server 20 may recognize content which is currently being displayed by the display device 100. When a captured image of the content is received from the display device 100, the ACR server 20 may recognize content corresponding to the captured image and transmit information on the recognized content to the display device 100. The captured image transmitted from the display device 100 to the ACR server 20 is one of finger-print information of the content currently being displayed by the display device 100, and information on the content transmitted from the ACR server 20 to the display device 100 may include a content ID.

The EPG server 30 may manage an EPG (Electronic Program Guide). The EPG server 30 may transmit the EPG to a content DB server 50 or the display device 100.

The content DB server 50 may generate a DB using the content-related information. Specifically, the content DB server 50 may receive content metadata for each content from the metadata DB server 40, receive EPG information from the EPG server 30, and map the received content metadata to the received EPG information to generate a content-related information DB.

In this case, the metadata DB server 40 may be a server that stores content metadata for each content provided by content providers. The content metadata may refer to data including content information and information on products, people, music, places, etc. appearing in each scene of the content.

The metadata DB server 40 may generate and store content metadata by fusing the metadata for the content received from a content management server 42 with additional information received from an additional information management server 44. The content management server 42 may receive the metadata for each content from a metadata provider, and the additional information management server 44 may receive additional information from an additional information provider. The metadata provider may be a data vendor and be, for example, a broadcast station, a VOD company, etc. The additional information provider may be, for example, various studios, broadcast stations, movie companies, data vendors and the like. The additional information may mean individual information on products, people, music, places, etc. The metadata DB server 40, the content management server 42 and the additional information management server 44 may configure the content system 4.

The content-related information DB may be a set of data to which content metadata corresponding to each content is mapped for each content included in the EPG. For example, the content-related information DB may include first content metadata for first content, second content metadata for second content, and the like. Accordingly, the controller 170 may obtain content-related information associated with each content for each content.

The content DB server 50 may receive an EPG from the EPG server 30 every first period, and may receive content metadata from the metadata DB server 40 every second period. In this case, the first period and the second period may be the same or different. That is, the period at which the content DB server 50 receives the EPG or content metadata may vary.

The account server 60 may be a server for linking the content-related information displayed on the mobile terminal 500 and the content-related information displayed on the display device 100. The account server 60 may be a server that manages each user's account.

The account server 60 may perform management by mapping the content-related information to each user. For example, the account server 60 may map and store a first user to the content-related information stored by the first user, and map and store a second user to the content-related information stored by the second user. Accordingly, when the display device 100 and the mobile terminal 500 are connected with the same user ID, the content-related information displayed on the mobile terminal 500 and the content-related information displayed on the display device 100 may be the same. In addition, in this case, a change in the content-related information generated in any one of the display device 100 and the mobile terminal 500 may be reflected in the other.

As described in FIG. 7, when the content DB server 50 generates and stores the content-related information DB, the display device 100 receives the content-related information DB from the content DB server 50, so that the content-related information may be provided to the user regardless of whether the content is currently being broadcast. That is, the controller 170 may display the content-related information on the display 180 according to a request regardless of whether the content is broadcast or not.

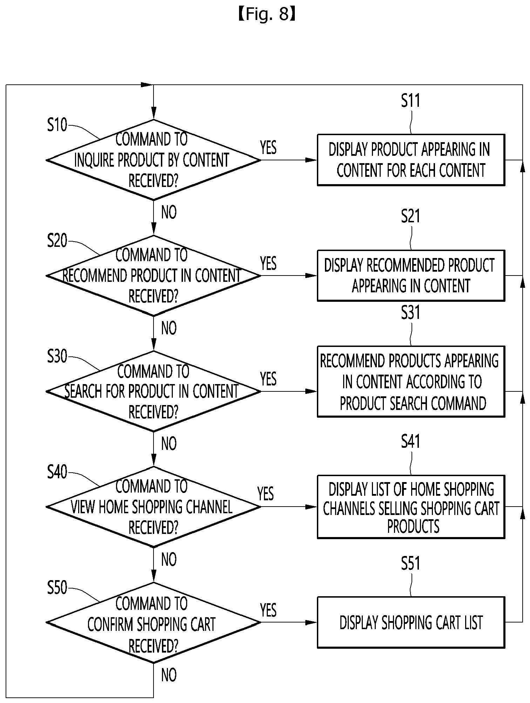

FIG. 8 is a flowchart illustrating a method of providing content-related information to a user by a display device according to an embodiment of the present disclosure.

The controller 170 may display content-related information by a method of displaying products by content, recommending products in content, displaying products in content according to a search command, displaying a home shopping channel related to content, displaying a shopping cart, etc. However, the above-described methods are merely exemplary, and the display device 100 may display the content-related information using various methods other than the above-described methods.

In addition, in FIG. 8, in order to describe various methods of displaying the content-related information, steps of determining whether each command is received are sequentially described, but the order shown in FIG. 8 is merely an example.

Accordingly, the controller 170 may determine whether each command is received and display the content-related information on the display 180 according to the received command.

According to an embodiment, the controller 170 may execute a content application and display a content-related menu as the content application is executed. The controller 170 may receive a command for displaying the content-related information through the content-related menu.

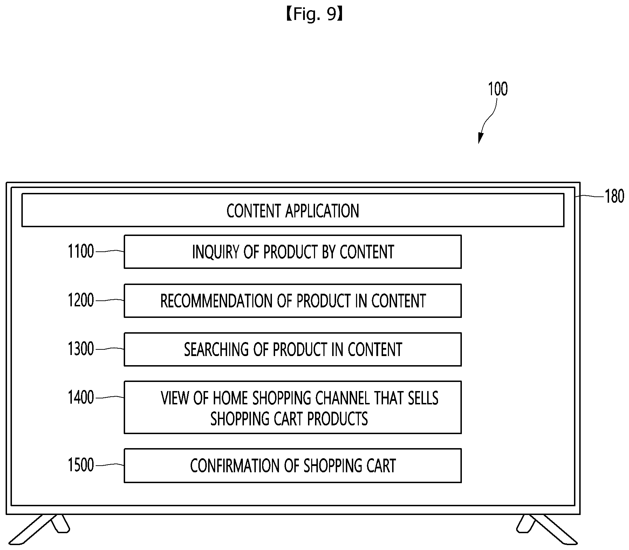

FIG. 9 is an exemplary view of a screen displayed when a display device according to an embodiment of the present disclosure executes a content application.

The controller 170 may display a content-related menu shown in the example of FIG. 9 when the content application is executed. The content-related menu includes at least one or all of an item 1100 for inquiring a product by content, an item 1200 for recommending a product in content, an item 1300 for searching for a product in content, an item 1400 for viewing a home shopping channel that sells shopping cart products, and a shopping cart confirmation item 1500, but each item is merely an example.

The controller 170 may receive a command to select any one item from the content-related menu.

When a command to select the item 1100 for inquiring the product by content is received, the controller 170 may recognize that a command for inquiring a product by content is received. When a command to select the item 1200 for recommending the product in content is received, the controller 170 may recognize that a command to recommend a product in content is received. When a command to select the item 1300 for searching for the product in content is received, the controller 170 may recognize that a command to search for a product in content is received. When a command to select the item 1400 for viewing the home shopping channel that sells shopping cart products is received, the controller 170 may recognize that a home shopping view command is received. When a command to select the shopping cart confirmation item 1500 is received, the controller 170 may recognize that a shopping cart confirmation command is received.

When any one of the above-described commands is received, the controller 170 may control the display 180 to display the content-related information in various ways according to the received command.

FIG. 8 will be described again.

The controller 170 may determine whether a command to inquire the product by content is received (S10), and display a product appearing in the content for each content (S11).

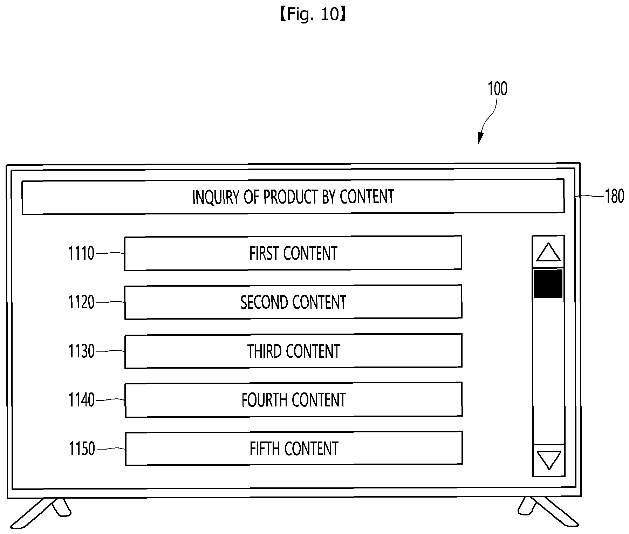

Next, a method of displaying a product appearing in content by a display device 100 according to an embodiment of the present disclosure will be described with reference to FIGS. 10 to 12.

FIGS. 10 to 12 are views illustrating an method of displaying a product appearing in content by a display device according to an embodiment of the present disclosure.

When the command to inquire the product by content is received, the controller 170 may display a content list shown in FIG. 10.

In this case, the content list may be composed of content including the content-related information. The controller 170 may display a content list including content including the content-related information, based on content metadata received from the content DB server 50. That is, the controller 170 may display the content list composed of only content including the content-related information on the display 180. In the example of FIG. 10, the content list may include at least some or all of a first content item 1110, a second content item 1120, a third content item 1130, a fourth content item and a fifth content item 1150.

When a command to select any one content item from the content list is received, the controller 170 may display information on products included in the content corresponding to the selected content item. That is, when any one content is selected from the content list, the controller 170 may display the content-related information corresponding to the selected content on the display 180.

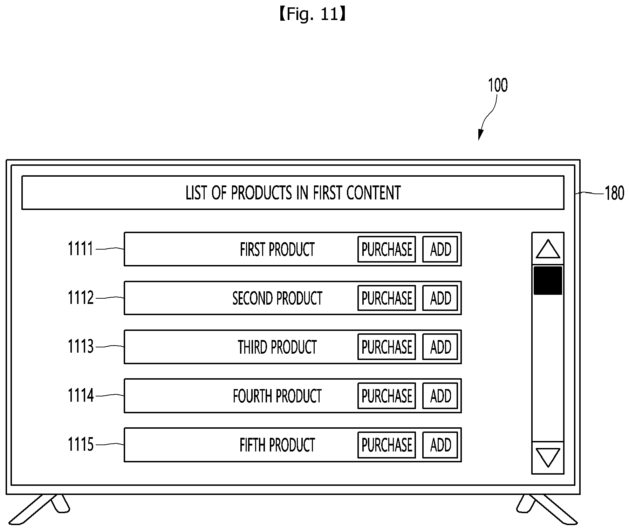

For example, when a command to select the first content item 1110 from the content list is received, the controller 170 may display a product list including products appearing in first content. Referring to the example of FIG. 11, as the command to select the first content item is received, the controller 170 may display the product list including at least some or all of the first product item 1111, the second product item 1112, the third product item 1113, the fourth product item 1114 and the fifth product item 1115. In this case, the first to fifth products may appear in the first content. Each of the first to fifth product items 1111 to 1115 may include a purchase icon and an add icon. The purchase icon may be an icon for purchasing a corresponding product and the add icon may be an icon for managing the corresponding product as stored content.

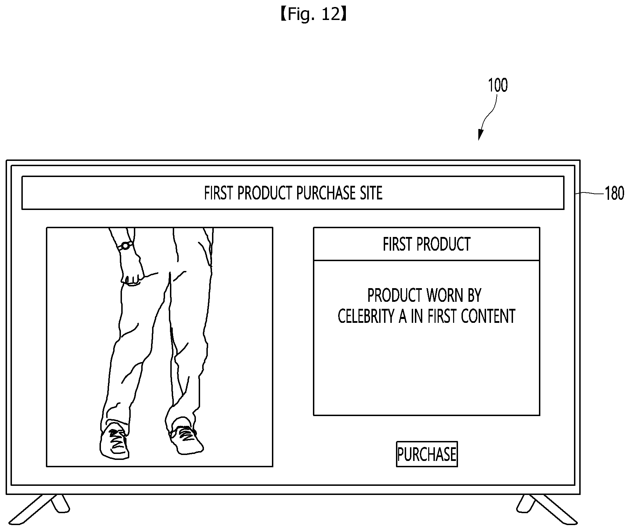

For example, the controller 170 may receive an command to select the purchase icon included in the first product item 1111, and, in this case, a first product purchase site shown in the example of FIG. 12 may be displayed on the display 180. That is, when a command to select the purchase icon of a product included in the product list is received, the controller 170 may access a site where the selected product can be purchased.

As described above, there is an advantage in that the user can easily check products appearing in the selected content by selecting the specific content. In addition, since a purchase site of the selected product is accessed by selecting a product appearing in the content, there is an advantage in that the product appearing in the content can be more easily purchased.

FIG. 8 will be described again.

When the command to inquire the product by content is not received, the controller 170 may determine whether a command to recommend a product in content has been received (S20). When the command to recommend the product in content is received, the controller 170 may display a recommended product appearing in the content (S21).

When the recommended product appearing in the content is displayed, the controller 170 may display products appearing in the content according to a predetermined sort.

The controller 170 may display products appearing in at least one content on the display 180 according to a requested sort. For example, the controller 170 may display products appearing in the content on the display 180 according to at least one of sort by popularity, sort by latest content, sort by person, sort by category, sort by recommendation or sort by user interest.

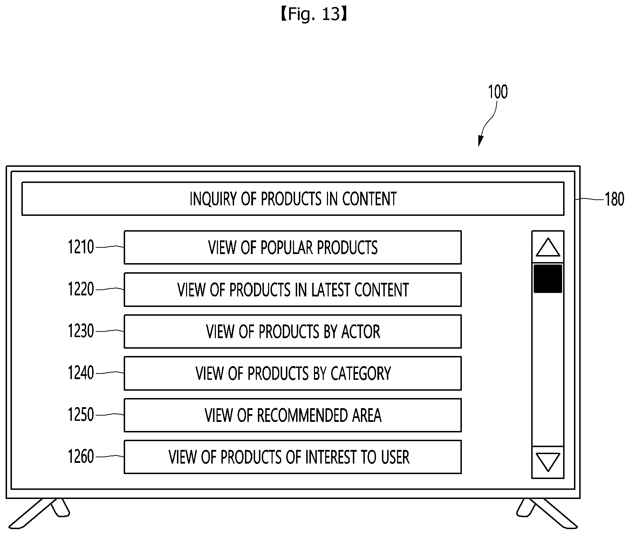

Next, a method of displaying a recommended product appearing in content by the display device 100 according to an embodiment of the present disclosure will be described with reference to FIGS. 13 to 20. FIGS. 13 to 20 are views illustrating a method of displaying a recommended product appearing in content by a display device according to an embodiment of the present disclosure.

When the command to recommend the product in content is received, the controller 170 may display a list of products inquired in content shown in FIG. 13.

In this case, the list of products inquired in content may include methods of selecting products to be provided to the user among products appearing in the content. The list of products inquired in content may include methods of sorting products appearing in the content.

The list of products inquired in content may include at least some or all of an item 1210 for viewing popular products, an item 1220 for viewing products in latest content, an item 1230 for viewing products by actor, an item 1240 for viewing products by category, an item 1250 for viewing a recommended area and an item 1260 for viewing products of interest to a user.

When a command to select any one item from the list of products inquired in content is received, the controller 170 may display the content-related information included in at least one content according to the selected item.

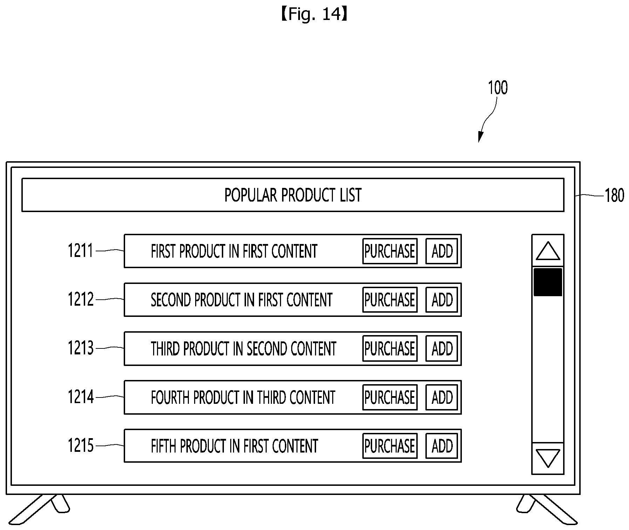

For example, when a command to select the item 1210 for viewing popular products is received, the controller 170 may control the display 180 to display products included in at least one content in order of popularity based on the content metadata. Referring to the example of FIG. 14, as the command to select the item 1210 for viewing popular products is received, the controller 170 may display a popular product list. The popular product list is a list of products appearing in content selected based on the content metadata and arranged in order of popularity. The order of popularity may be any one of the order of sales, the order of views, and the like, but this is only an example. The popular product list includes an item 1211 for a first product in first content, an item 1212 for a second product in first content, an item 1213 for a third product in second content, and an item 1214 for a fourth product in third content, and an item 1215 for a fifth product in first content. As such, the popular product list may include products appearing in a plurality of content regardless of the content.

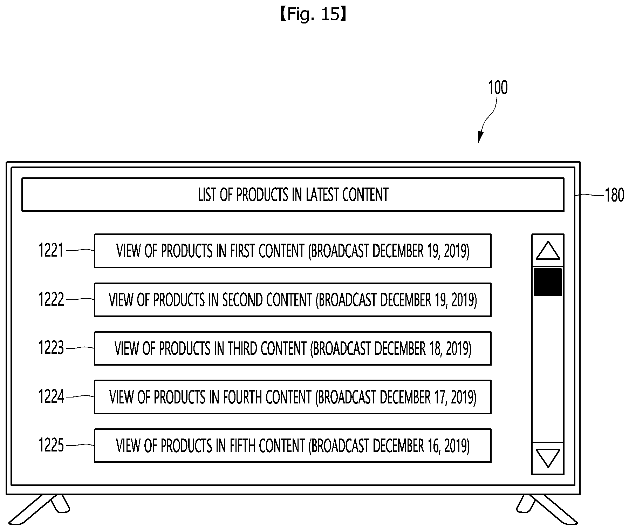

When a command to select the item 1220 for viewing products in latest content, the controller 170 may control the display 180 to display products included in the latest content based on the content metadata. Referring to the example of FIG. 15 , the controller 170 may display a list of products in the latest content as the command to select the item 1220 for viewing products in latest content is received. The list of products in the latest content is a list of latest content selected based on the content metadata, and may be a list in which content including the content-related information is sorted according to broadcast dates.

The list of products in the latest content is an item 1221 for viewing products in first content, an item 1222 for viewing products in second content, an item 1223 for viewing products in third content, an item 1224 for viewing products in fourth content and an item 1225 for viewing products in fifth content. When any one is selected from the list of products in the latest content, the controller 170 may display products appearing in the selected content. As such, the controller 170 may display products appearing in the latest content through the list of products in the latest content, and in this case, the user can more easily check the products appearing in the most recently broadcast content. Accordingly, it has the advantage of being able to easily identify the latest types of products.

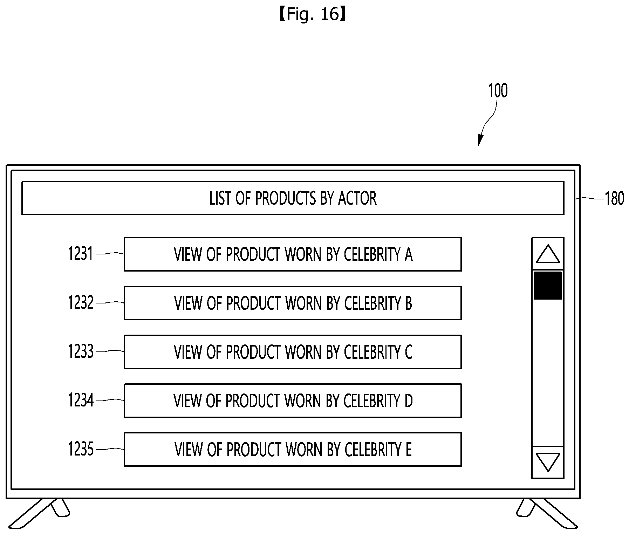

When a command to select the item 1230 for viewing products by actor is received, the controller 170 may control the display 180 so that products worn by actors are displayed for each actor in the content based on the content metadata. Referring to the example of FIG. 16 , the controller 170 may display a list of products by actor as a command to select the item 1230 for viewing products by actor is received. The list of products by actor is composed of actors selected based on the content metadata, and may be a sorted list of actors wearing products included in the content-related information.

The list of products by actor may include an item 1231 for viewing a product worn by celebrity A, an item 1232 for viewing a product worn by celebrity B, an item 1233 for viewing a product worn by celebrity C, and an item 1234 for viewing a product worn by celebrity D, and an item 1235 for viewing a product worn by celebrity E. When any one is selected from the list of products by actor, the controller 170 may display products worn by the selected actor. As such, the controller 170 can display the products worn by the actors by actor, and in this case, the user can easily check the products worn by their favorite actors without having to separately search for the products.

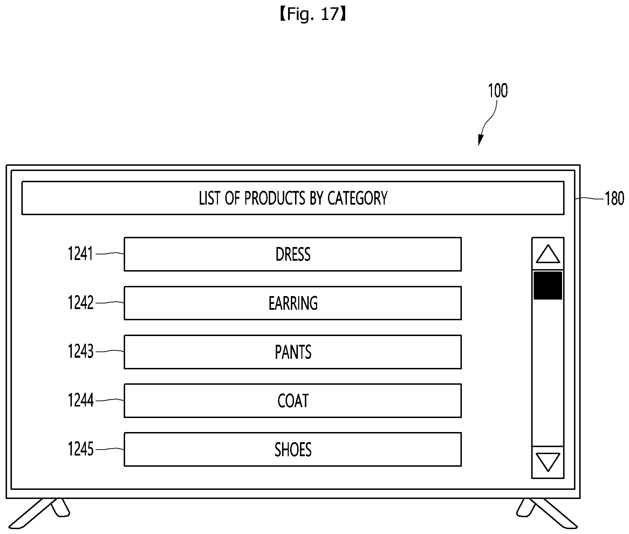

When a command to select the item 1240 for viewing products by category is received, the controller 170 may control the display 180 to display products appearing in the content by category based on the content metadata. Referring to the example of FIG. 17, the controller 170 may display a list of products by category, as the command to select the item 1240 for viewing products by category is received. The list of products by category may be composed of categories selected based on the content metadata and may be a list in which the products included in the content-related information are classified by category.

The list of products by category may include a dress item 1241, an earring item 1242, a pants item 1243, a coat item 1244 and a shoes item 1245. When any one is selected from the list of products by category, the controller 170 may display products corresponding to the selected category. As such, the controller 170 may display the products appearing in the content by category and, in this case, there is an advantage in that the user can easily find the products in the content by category.

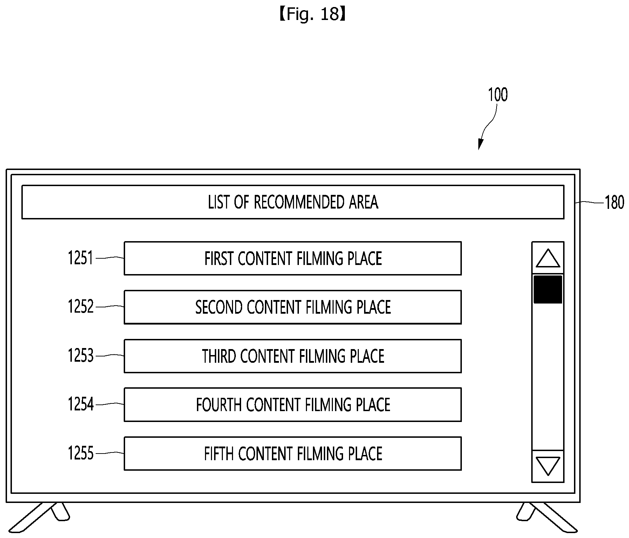

When a command to select the item 1250 for viewing a recommended area is received, the controller 170 may control the display 180 to display information on an area appearing in the content based on the content metadata. Referring to the example of FIG. 18, the controller 170 may display a list of recommended areas, as the command to select the item 1250 for viewing the recommended area is received. The list of recommended areas is a list of content selected based on the content metadata and may be a list in which content including the area information is sorted as the content-related information.

The list of recommended areas may include a first content filming place item 1251, a second content filming place item 1252, a third content filming place item 1253, a fourth content filming place item 1254 and a fifth content filming place item 1256. When any one is selected from the list of recommended areas, the controller 170 may display information on a filming place corresponding to the selected content. As such, the controller 170 may display a place where the content is filmed by content and, in this case, there is an advantage in that the user can easily find an area appearing in each content.

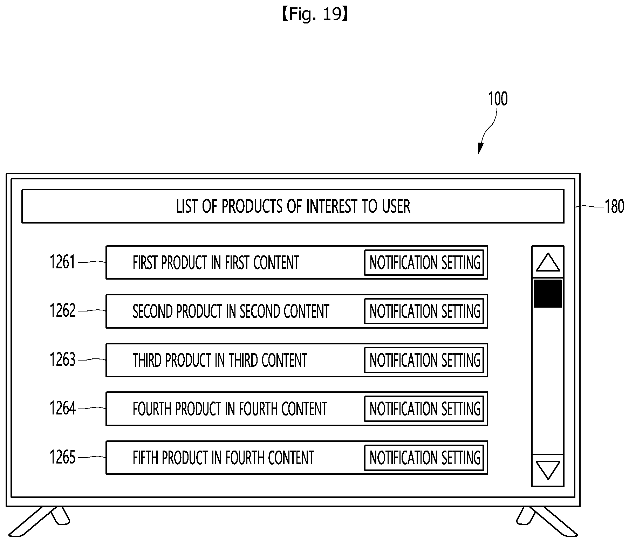

When a command to select the item 1260 for viewing products of interest to the user is received, the controller 170 may control the display 180 so that products appearing in the content are displayed in order of user interests based on the content metadata. Referring to the example of FIG. 19, the controller 170 may display a list of products of interest to a user, as the command to select the item 1260 for viewing products of interest to the user is received,. The list of products of interest to the user is a list of products in which the user is interested, which is selected based on the content metadata, and may include products selected based on products managed as products stored by the user.

The list of products of interest to the user may include an item 1261 for a first product in first content, an item 1262 for a second product in second content, an item 1263 for a third product in third content, an item 1264 for a fourth product in fourth content, and an item 1265 for a fifth product in fourth content. When any one is selected from the list of products of interest to the user, the controller 170 may display information on the selected product. As such, the controller 170 may display products of interest to the user based on stored products, and in this case, there is an advantage in that a product related to the user's preference may be recommended.

Meanwhile, each of the items included in the list of products of interest to the user may include a notification setting icon. The notification setting icon may be an icon for setting a notification to be output when content in which a corresponding product appears is broadcast. When the notification setting icon is selected, the controller 170 may output a notification when a product corresponding to the selected notification setting icon appears.

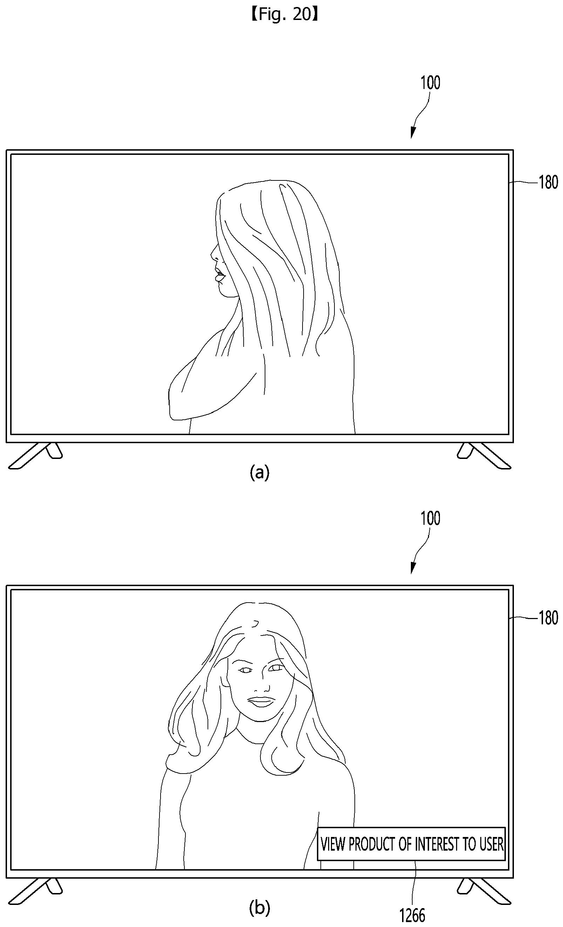

FIG. 20 is a view illustrating a method of outputting a notification by the controller 170 when a product for which a notification is set appears. When the content is displayed as shown in (a) of FIG. 20, the controller 170 may determine whether the product for which the notification is set appears. When the product for which the notification is set appears, the controller 170 may output the notification by displaying a notification icon 1266 shown in (b) of FIG. 20. The notification icon 1266 may be a notification indicating that a product in which the user is interest is included in the content. When a command to select the notification icon 1266 is received, the controller 170 may control the display 180 to display information on the product in which the user is interest and which appears in the content. As such, the controller 170 may output the notification of the product of interest to the user and, in this case, the user can easily know whether a product of interest appears. In addition, the controller 170 may output a notification of the product of interest to the user, thereby inducing the user to purchase the product.

FIG. 8 will be described again.

When the command to recommend the product in content is not received, the controller 170 may determine whether a command to search for a product in content has been received (S30). When the command to search for the product in content is received, the controller 170 may recommend products appearing in the content according to the product search command (S31).

The controller 170 may receive the product search command. According to an embodiment, the controller 170 may receive the product search command through voice. When the voice command is received, the controller 170 may display the content-related information on the display 180 according to the received voice command.

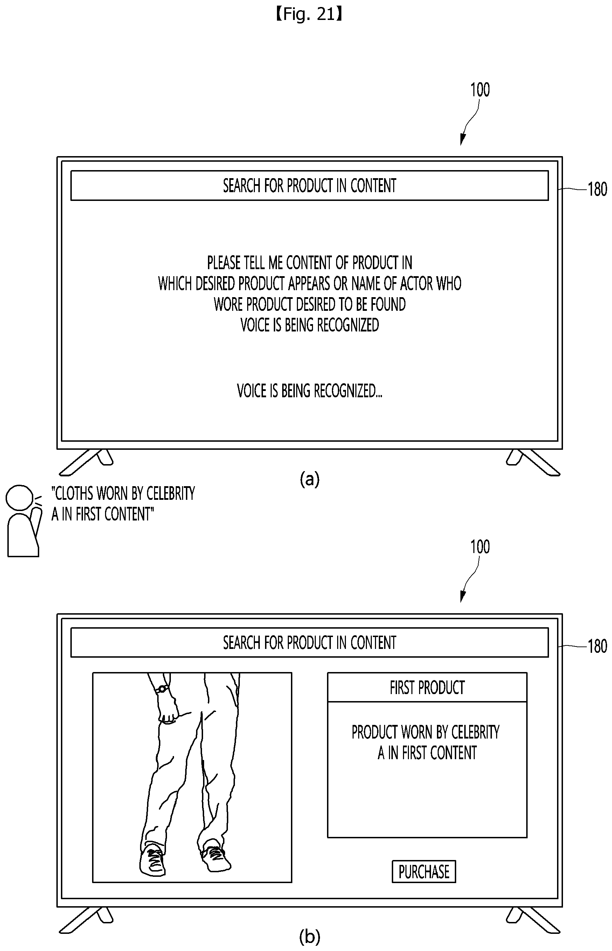

Next, a method of displaying content-related information according to the voice command by the display device 100 according to the embodiment of the present disclosure will be described with reference to FIGS. 21 to 22. FIGS. 21 to 22 are views illustrating a method of displaying content-related information according to a voice command by a display device according to an embodiment of the present disclosure.

First, an example of FIG. 21 will be described. The controller 170 may receive a product search command such as "clothes worn by celebrity A in the first content". The controller 170 may control the display 180 to display a search guide message shown in (a) of FIG. 21 when the product search command is received. The search guidance message may be "Please tell me the content of the product in which a desired product appears or the name (or place, music, etc.) of an actor who wore a product desired to be found", but is only an example. In addition, the controller 170 may not display the search guide message when receiving the product search command.

When receiving the product search command, the controller 170 may search for a product corresponding to the product search command in content metadata and display it on the display 180. That is, the controller 170 may search the content metadata for information that matches any one of content, product, people, area, etc., corresponding to the product search command, and display the searched information on the display 180 as shown in (b) of FIG. 21. When the product search command is "clothes worn by celebrity A in the first content," the controller 170 may display information on the product worn by celebrity A in the first content on the display 180.

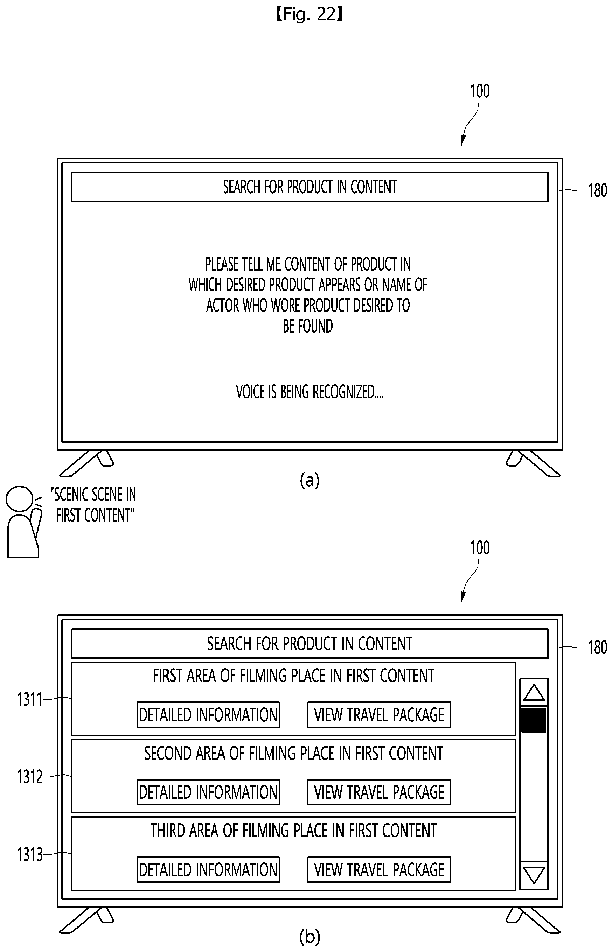

Next, the example of FIG. 22 will be described. The controller 170 may receive a product search command such as "a scenic scene in the first content". Similarly, the controller 170 may display or omit the search guide message when receiving the product search command.

When the product search command is received, the controller 170 may search the content metadata for a product corresponding to the product search command and display it on the display 180. For example, when the product search command is the "scenic scene in the first content", the controller 170 may search the content metadata for information on an area appearing in the first content. The controller 170 may display search result items 1311 to 1313 including areas appearing in the first content as shown in FIG. 22(b) based on the search results. In addition, the search result items 1311 to 1313 may include any one of a detailed information icon and a travel package view icon. When receiving a command to select the detailed information icon, the controller 170 may display detailed information on an area corresponding to the selected detailed information icon. Alternatively, the controller 170 may display travel package information of an area corresponding to the selected travel package view icon, when receiving a command to select the travel package view icon. As such, there is an advantage in that the user can easily find detailed information of an area appearing in the content through the detailed information icon, or easily search for and reserve a travel package in the area appearing in the content through the travel package view icon.

In addition, the controller 170 may receive a voice command such as "white dress from the second content".

FIG. 8 will be described again.

When the command to search for the product in content is not received, the controller 170 may determine whether a home shopping channel view command has been received (S40). When the home shopping channel view command is received, the controller 170 may control the display 180 to display a list of home shopping channels that sell shopping cart products (S41).

According to an embodiment, the controller 170 may receive the home shopping channel view command and display information on a broadcast for selling the product appearing in the content on the display 180 when the home shopping channel view command is received.

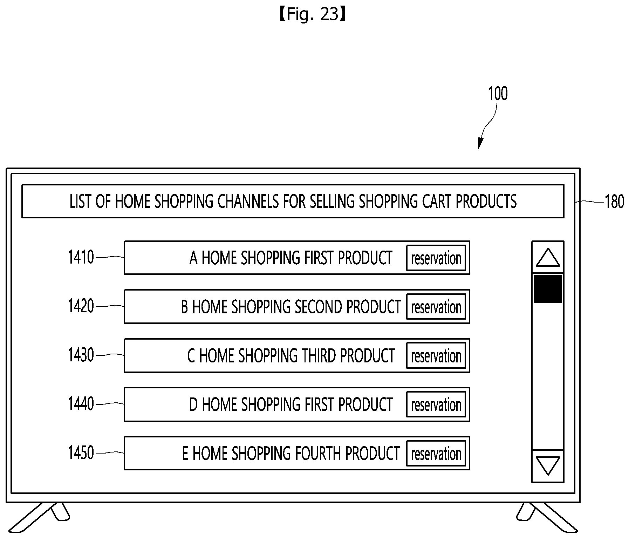

FIG. 23 is a view illustrating an embodiment of a method of displaying information on a broadcast for selling a product appearing in content by a display device according to an embodiment of the present disclosure.

When the home shopping channel view command is received, the controller 170 may display a home shopping channel list shown in FIG. 23. For example, the home shopping channel list may include items including information on home shopping for selling products managed as stored products. As another example, the home shopping channel list may include items including information on home shopping for selling products included in the content-related product, regardless of the stored products.

In the example of FIG. 23, the home shopping channel list may include A home shopping first product item 1410, a B home shopping second product item 1420, a C home shopping third product item 1430, a D home shopping first product item 1440 and an E home shopping fourth product item 1450. Each of the items may include at least one of a channel, a broadcast time, a broadcast station name, a product name or a reservation icon. When a command to select the reservation icon is received, the controller 170 may set a reservation for a home shopping broadcast using the selected reservation icon.

Meanwhile, according to another embodiment, the controller 170 may further display information on a broadcast for selling the product appearing in the content on the display 180, when the content is being displayed.

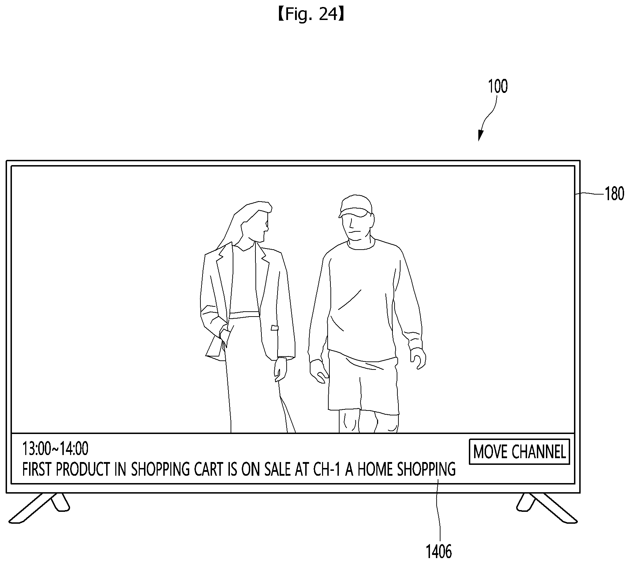

FIG. 24 is a view illustrating another embodiment of a method of displaying information on a broadcast for selling a product appearing in content by a display device according to an embodiment of the present disclosure.

Referring to the example of FIG. 24, when a home shopping broadcast for selling a product appearing in content which is being displayed starts, the controller 170 may display a notification 1406 indicating information on the home shopping broadcast. The notification 1406 may include a channel movement icon, and, when a command to select the channel movement icon is received, the controller 170 may move the channel to the home shopping channel displayed in the notification 1406.

Alternatively, even when the home shopping broadcast corresponding to a home shopping broadcast reservation set when the content is being displayed starts, the controller 170 may display a notification 1406 indicating information on the home shopping broadcast as shown in FIG. 24.

In this way, the controller 170 may display information on the broadcast for selling products appearing in the content, and, in this case, there are advantages in that the user can obtain detailed information on the products appearing in the content through broadcast and can easily purchase the products.

FIG. 8 will be described again.

When the home shopping channel view is not received, the controller 170 may determine whether a shopping cart confirmation command has been received (S50). When the shopping cart confirmation command has been received, the controller 170 may display a shopping cart list (S51).

The controller 170 may receive the shopping cart conformation command. The controller 170 may display a shopping cart list when receiving the shopping cart conformation command.

Here, the shopping cart conformation command is a command for displaying products being managed as stored products, and the shopping cart list may be composed of products managed as stored products.

The controller 170 may manage at least one product as a stored product through a command to select the add icon shown in FIG. 11. That is, the controller 170 may manage at least one product appearing in the content as a stored product.

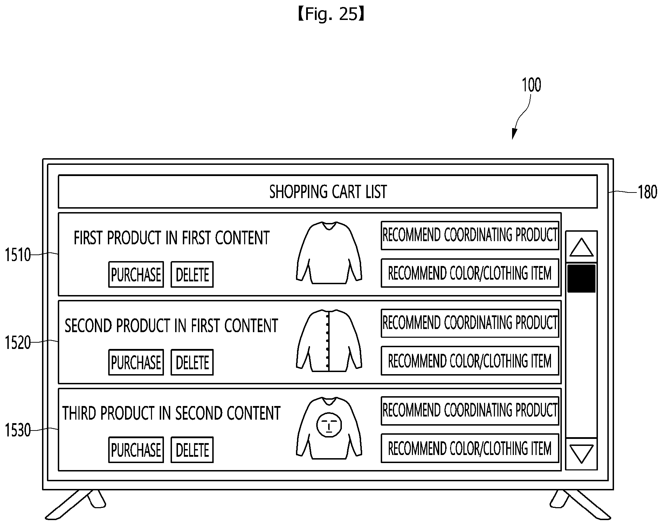

FIG. 25 is a view illustrating a method of displaying a list composed of stored products by a display device according to an embodiment of the present disclosure.

The controller 170 may display the shopping cart list on the display 180 according to the shopping cart conformation command as shown in FIG. 25. The shopping cart list may include stored product items 1510, 1520 and 1530 . The stored product items 1510, 1520 and 1530 may include information on products being managed as stored products, respectively. Each of the stored product items 1510, 1520 and 1530 may include at least one of a purchase icon, a delete icon, a coordinating product recommendation icon, or a color/clothing item recommendation icon.

The purchase icon may be an icon for moving to a purchase site of a stored product. When receiving a command to select a purchase icon, the controller 170 may display, on the display 180, a site where a stored product corresponding to the selected purchase icon may be purchased.

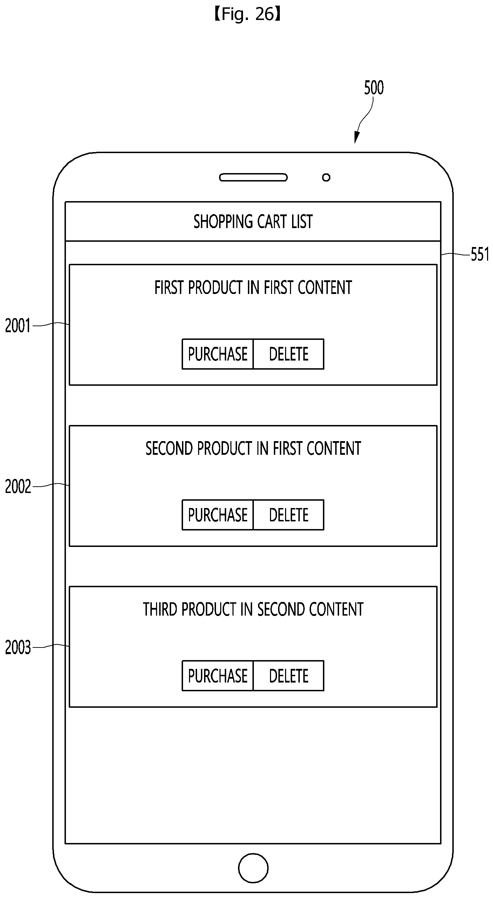

The delete icon may be an icon for deleting a stored product from the shopping cart list. When receiving a command to select the delete icon, the controller 170 may delete a stored product corresponding to the selected delete icon from the shopping cart list. On the other hand, information on changes in stored products, such as deletion, may also be reflected in the mobile terminal 500 linked with the display device 100. This will be described in more detail in FIG. 26 .

The coordinating product recommendation icon may be an icon for making a recommendation as all outfit information related to a corresponding product is inquired within the content. When receiving a command to select the coordinating product recommendation icon, the controller 170 may further display at least one product appearing along with a stored product corresponding to the selected coordinating product recommendation icon. That is, the controller 170 may control the display 180 to further display at least one product appearing along with the displayed product when displaying the product appearing in the content.

The color/clothing item recommendation icon may be an icon for recommending a color/clothing item extracted as matching the corresponding product a lot by searching for shopping cart product images. When receiving a command to select the color/clothing item recommendation icon, the controller 170 may display a color/clothing item matching the stored product corresponding to the selected color/clothing item recommendation icon.

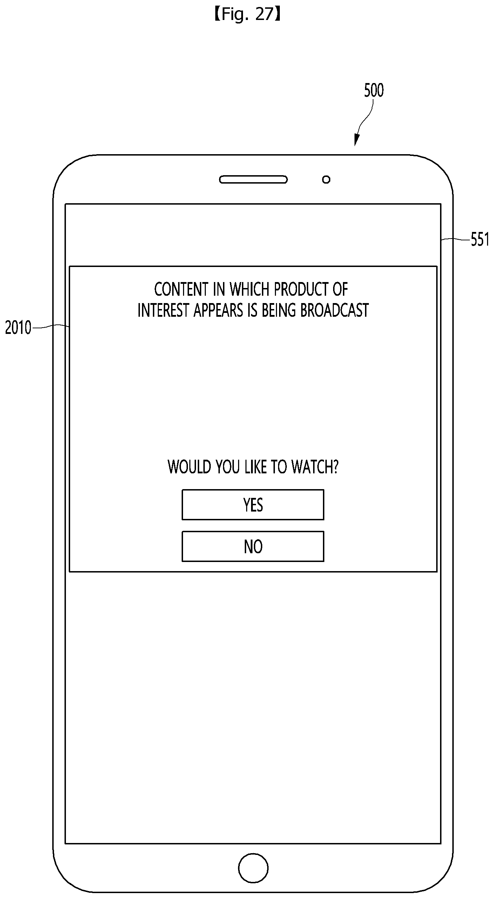

Next, a method of linking and operating the display device 100 and the mobile terminal 500 will be described with reference to FIGS. 26 and 27. FIGS. 26 and 27 are views illustrating a method of displaying content-related information by a mobile terminal linked to a display device according to an embodiment of the present disclosure.

The mobile terminal 500 may receive the content-related information included in the content-related information DB from the content-related information DB server 40, similarly to the display device 100.

The content-related information displayed on the mobile terminal 500 and the content-related information displayed on the display device 100 may operate in synchronization. Specifically, the account server 60 may manage each user's account, and the content-related information of the user may be stored in each account. For example, information on stored products selected or deleted by the user may be stored in each account. In addition, information on stored products as well as content information viewed by the user, home shopping information, and various reservation information and alarm information may be stored in each account.

Accordingly, the change in the content-related information generated in any one of the display device 100 and the mobile terminal 500 may be reflected in the other.

For example, in a state where the mobile terminal 500 displays a shopping cart list as shown in FIG. 26 , a delete command of the first item 2001 may be received. In this case, the mobile terminal 500 displays only the second item 2002 and the third item 2003 except for the first item 2001, and, after that, even when the display device 100 displays the shopping cart list, only the second item 2002 and the third item 2003 may be displayed except for the first item 2001. Similarly, when at least one item is added to the shopping cart list through any one of the mobile terminal 500 and the display device 100, the added item may be further displayed when displaying the shopping cart list in the other.

That is, in the case of the same account, the shopping cart list displayed on the mobile terminal 500 may be controlled in the same way as the shopping cart list displayed on the display device 100.

As another example, when a notification is set through the display device 100, a notification 2010 may be output from the mobile terminal 500 as shown in FIG. 27 when content in which a product for which notification is set appears is broadcast.

According to an embodiment, if there is a product for which a notification is set, a notification may be output from each of the display device 100 and the mobile terminal 500 when content in which a product for which a notification is set appears is broadcast.

According to another embodiment, if there is a product for which a notification is set, the controller 170 may determine whether the display device 100 is powered on or not when content in which a product for which a notification is set appears is broadcast, output the notification from the display device 100 when the display device 100 is powered on, and output the notification from the mobile terminal 500 when the display device 100 is powered off. In this case, there is an advantage in that user inconvenience is minimized by minimizing the case in which the notification is unnecessarily output from both the display device 100 and the mobile terminal 500, and the notification may be output to be checked by the user.

The mobile terminal 500 is not limited to that described with reference to FIGS. 26 and 27, and may display the content-related information in the same way as the display device 100. The mobile terminal 500 may execute a content application similarly to the display device 100, and may display a content-related menu as the content application is executed. That is, the mobile terminal 500 may operate according to the method described with reference to FIGS. 8 to 25 .

According to the above-described method, etc., there is an advantage in that the user can easily purchase the product in the content through the mobile terminal 500. Specifically, since the user can check the product in the content through the mobile terminal 500, there is an advantage in that input such as inputting a mobile phone number to the display device 100 is unnecessary in order to check and purchase the product through the mobile terminal 500.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the technical spirit of the present disclosure but to illustrate the technical idea of the present disclosure, and the technical spirit of the present disclosure is not limited by these embodiments.

The scope of protection of the present disclosure should be interpreted by the appending claims, and all technical ideas within the scope of equivalents should be construed as falling within the scope of the present disclosure.

## Claims

1. A display device comprising:
a controller configured to obtain content-related information associated with each content for each content; and
a display configured to display the obtained content-related information,
wherein the controller displays the content-related information on the display according to a request regardless of whether the content is broadcast.

2. The display device of claim 1, wherein the content-related information comprises information on at least one of products, people, places or music appearing in content.

3. The display device of claim 1, wherein, when any one content is selected from a contest list, the controller displays the content-related information corresponding to the selected content on the display.

4. The display device of claim 1, wherein the controller displays the content list composed of content including the content-related information on the display.

5. The display device of claim 1, wherein the controller displays products appearing in at least one content on the display according to requested sort.

6. The display device of claim 5, wherein the controller displays the products appearing in the content on the display according to at least one of sort by popularity, sort by latest content, sort by person, sort by category, sort by recommendation or sort by user interest.

7. The display device of claim 1, wherein the controller further displays broadcast information for selling a product appearing in content on the display.

8. The display device of claim 1, wherein the controller manages at least one product appearing in content as a stored product and recommends a product of interest to a user based on the stored product.

9. The display device of claim 1, wherein, when a voice command is received, the controller displays the content-related information on the display according to the received voice command.

10. The display device of claim 1, wherein the controller controls the display to further display at least one product appearing with a product displayed when the product appearing in the content is displayed.

11. A display system comprising:
a content DB server; and
a display device comprising a controller configured to obtain content-related information received from the content DB server and a display configured to display the obtained content-related information,
wherein the controller displays the content-related information on the display according to a request regardless of whether the content is broadcast.

12. The display system of claim 11, wherein the content DB server receives content metadata from a first server, receives EPG information from a second server and maps the received content metadata to the received EPG information to generate a content-related information DB.

13. The display system of claim 12, further comprising a mobile terminal configured to receive the content-related information included in the content-related information DB.

14. The display system of claim 13, further comprising an account server for linking the content-related information displayed on the mobile terminal and the content-related information displayed on the display device.

15. The display system of claim 14, wherein a change in the content-related information generated in any one of the display device and the mobile terminal is reflected in the other.
